# EUROPEAN PATENT SPECIFICATION

(11) **EP 4 074 508 B1**
(45) Date of publication and mention of the grant of the patent: **23.09.2026**
(21) Application number: 20899820.3
(22) Date of filing: 27.11.2020
(51) Int. Cl.: C09D 11/10, C09D 11/322, C09D 11/38, C09D 11/40, C09D 11/54, B41J 2/01, B41M 5/00

(54) **PRETREATMENT LIQUID, INK SET, AND PRINTED MATTER**
VORBEHANDLUNGSFLÜSSIGKEIT, TINTENSATZ UND BEDRUCKTES MATERIAL
LIQUIDE DE PRÉTRAITEMENT, ENSEMBLE D'ENCRES ET MATIÈRE IMPRIMÉE

(30) Priority: 09.12.2019 JP 2019222154
(43) Date of publication of application: 19.10.2022
(73) Proprietor: artience Co., Ltd., Tokyo (JP); TOYOCOLOR CO., LTD., Tokyo 104-8381 (JP)
(72) Inventor: SUGIHARA Masahiro, Tokyo 104-8378 (JP); TETSUKA Toshihiro, Tokyo 104-8378 (JP)
(74) Representative: SSM Sandmair
(86) International application number: PCT/JP2020/044355
(87) International publication number: WO 2021/117517

(56) References cited:
- JP-A- 2002 038 385
- JP-A- 2012 153 754
- JP-A- 2013 099 886
- JP-A- 2013 099 886
- JP-A- 2013 176 960
- JP-A- 2019 035 021
- US-A1- 2017 292 035
- US-A1- 2017 349 774
- US-A1- 2018 265 728
- US-A1- 2019 292 395

## Description

### TECHNICAL FIELD

An embodiment of the present invention relates to a pretreatment liquid which is used together with an aqueous inkjet ink, an ink set, and a printed matter.

### BACKGROUND ART

Unlike the conventional plate-based printing such as offset printing and gravure printing, digital printing does not require a prepress film or platemaking, and therefore can facilitate cost reductions and small lot multiple products.

With an inkjet recording method, which is one type of digital printing, characters and images are obtained by directly ejecting and depositing ink droplets from an extremely fine nozzle onto a recording member. The inkjet recording method provides advantages such as minimal noise from the devices used, good operability, and ease of coloration, and therefore, the inkjet recording method has been widely used in output devices in offices and homes. Further, due to improvements in inkjet technologies, the use in industrial application as digital printing output devices has begun.

Conventionally, in industrial applications, the inks used with inkjet recording methods have been solvent-based inks or UV inkjet inks. In recent years, however, there has been an increasing demand for aqueous inkjet inks from the perspective of environmental concerns

The conventional aqueous inks for inkjet recording methods (hereinafter, also simply referred to as "for inkjet applications") were designed specifically for standard paper or special purpose paper (for example, glossy photographic paper). Namely, the conventional aqueous inks comprise water as a main component, and a water-soluble organic solvent such as glycerin and glycol added to control the wettability and drying property with respect to a substrate. When a pattern such as characters or images is printed onto a substrate using an aqueous ink for inkjet applications (hereinafter, referred to as the "aqueous inkjet ink", the "aqueous ink", or simply the "ink") comprising these liquid components, the liquid components will penetrate into the substrate and dry, and the ink will be fixed.

On the one hand, not only high permeability substrates such as a standard paper, a special paper, a high quality paper and a recycled paper, but also low permeability(low absorption) substrates such as a coated paper, an art paper, a lightly coated paper and a film substrate also exist as the substrates for inkjet applications. A practically acceptable image quality has been achieved, using the conventional aqueous inkjet inks on the high permeability substrates. However, when a conventional aqueous inkjet ink was used for a low absorption substrate such as a coated paper, an art paper, a lightly coated paper and a film, the liquid ink droplets undergo absolutely no penetration into the substrate following impact. Accordingly, the drying caused by the penetration of the liquid components does not occur, and bleeding of the ink droplets tends to occur, resulting in a deterioration in the image quality.

The treatment of low absorption substrates with a pretreatment liquid is known as an approach to address the problem in which the image quality decreases. In general, two types of pretreatment liquids for aqueous inkjet inks are known. The first type of pretreatment liquid which forms a layer (ink receiving layer) that absorbs the liquid components of the aqueous inkjet ink to improve the drying property (see Patent Documents 1 and 2). The second type of pretreatment liquid forms a layer (ink aggregation layer) that intentionally causes aggregation of the solid components and an increase in the ink viscosity to prevent bleeding or color unevenness between the droplets and improve the image quality (see Patent Documents 3 and 4).

However, in the case of an ink receiving layer such as Patent Documents 1 and 2, when a large amount of ink is received at once, for example, cracking of the image which is attributed to the swelling of the ink receiving layer, bleeding or color unevenness caused by the excess amount of ink over the receivable limit, and a decrease in the concentration of the ink components due to the absorption into the receiving layer may occur. Further, in the case of forming the ink receiving layer, the coating film thickness of the pretreatment liquid needs to be made thicker than than the case of an ink aggregation layer which will be described later. When the amount of coating is increased, the drying property of the pretreatment liquid itself may decrease, and defects such as drying property insufficiency become a concern. Further, as described above, when used with a low absorption substrate, the pretreatment liquid does not penetrate the substrate, and therefore, it is believed that the aforementioned defects become more likely.

On the other hand, as an example of a pretreatment liquid which forms an ink aggregation layer, Patent Document 3 describes a pretreatment liquid containing a polyvalent metal salt and (cationized) hydroxyethyl cellulose, and having a prescribed surface tension. A high quality printed matter having a high image density, without bleeding, and having excellent scratch resistance can be obtained by using this pretreatment liquid. However, while a pigment can be fixed with the aggregation layer and mixed color bleeding and bleeding suppressed, there is the problem that the wet-spreading after the ink droplets were deposited became insufficient and further the filling of the printed portion was unsatisfactory, by the adhesion and the thickening of the ink due to pigment aggregation.

Patent Document 4 describes a pretreatment liquid comprising a coagulant and a specific surfactant. When this pretreatment liquid was applied on a substrate, a printed matter in which the pretreatment liquid was sufficiently wet-spread on the substrate, and in which voids in the ink were suppressed even after the ink was deposited can be obtained. However, even though the pretreatment liquid can be sufficiently wet-spread on the substrate by use of a surfactant, there was the problem that the filling of the printed portion was unsatisfactory because the ink could not be wet-spread on the surface on which the pretreatment liquid was coated.

As stated above, the pretreatment liquid which forms an aggregation layer is advantageous for the improvement of mixed color bleeding by pigment aggregation. However, due to pigment aggregation, the adhesion and the thickening of the ink occurs prior to the ink being sufficiently wet-spread, and until now, due to the pretreatment liquid, improvements in both the mixed color bleeding and the wet-spreading of the ink have not been achieved.

Furthermore, the ink does not sufficiently penetrate in a low absorption substrate such as a coated paper, an art paper, a lightly coated paper and a film substrate. Therefore, due to unsatisfactory drying and insufficient fixing of the ink, an unsatisfactory adhesion to a low absorption substrate is likely to occur. Specifically, unsatisfactory drying and insufficient fixing are remarkably likely to occur in a non-penetrative substrate such as a film substrate.

With respect thereto, a pretreatment liquid which provides an adhesive function by use of a resin as a binder component is also known. However, based on investigations by the present inventors, in order to achieve both adhesion and image quality, a pretreatment liquid which uses a resin together with a coagulant cause a remarkable deterioration in storage stability. In addition, it is understood that the adhesion and the image quality were also inferior compared to when the aforementioned component was used alone.

In order to solve the problem, for example, a printing method can be imagined in which a liquid composition containing a resin as a binder component and a liquid composition containing a coagulant were prepared separately, and were applied on a substrate immediately after mixing both. However, as printing over a long period of time is not possible, and the workability is remarkably poor, the aforementioned method is unlikely to be suitable for practical use.

As stated above, a printed matter having excellent adhesion and drying property on a low absorption substrate, and, an excellent image quality in which the wet-spreading is good without mixed color bleeding and color unevenness, and furthermore, a pretreatment liquid having an excellent storage stability over a long period of time has not existed until now.

### PRIOR ART DOCUMENTS

### PATENT DOCUMENTS

Patent Document 1: JP 2000-238422 A
Patent Document 2: JP 2000-335084 A
Patent Document 3: JP 2005-074655 A
Patent Document 4: JP 2019-065087 A

JP 2013/099886 A discloses a treatment liquid for use in inkjet recording includes water and a water-soluble organic solvent. The water-soluble organic solvent includes a water-soluble organic solvent having a polyoxyalkylene skeleton. The treatment liquid further includes a nonionic surfactant having a polyoxyalkylene skeleton. The total blending amount (X+Y) of the water-soluble organic solvent (X) having the polyoxyalkylene skeleton and the nonionic surfactant (Y) having the polyoxyalkylene skeleton relative to the treatment liquid total amount is ≥ 40 wt.%.

US 2018/0265728 A1 discloses a printing method including applying a processing fluid to a recording medium and applying an ink to the recording medium, wherein the processing fluid contains a first nonionic resin, the first nonionic resin having a glass transition temperature of 15 °C or lower, wherein the ink contains a second nonionic resin and a coloring material.

US 2017/0292035 A1 discloses a treatment liquid composition containing water, 1,2-alkanediol, and an aggregating agent aggregating or thickening a component of an ink composition containing a pigment. The treatment liquid composition is used for a printing method performed by causing the ink composition to adhere to cloth by an ink jet method.

US 2017/0349774 A1 discloses an ink set including an ink composition which contains a colorant and water; and a treatment liquid which contains water-insoluble resin particles in which the content of a carboxy group or a salt of the carboxy group is in a range of 1.0 mmol to 7.0 mmol per 1 g of the water-insoluble resin particles, a compound that causes the colorant in the ink composition to aggregate, and water.

### SUMMARY OF THE INVENTION

### PROBLEMS INVENTION AIMS TO SOLVE

In order to solve the conventional problems, the present invention provides a pretreatment liquid by which a printed matter having excellent drying property and adhesion on a low absorption substrate such as a coated paper, an art paper, a lightly coated paper and a film substrate, and, an excellent image quality in which the wet-spreading is good without mixed color bleeding and color unevenness, and furthermore, having an excellent storage stability over a long period of time. Further, the present invention also provides an ink set comprising the pretreatment liquid and an aqueous inkjet ink and which suitably expresses the aforementioned properties.

### MEANS FOR SOLUTION OF THE PROBLEMS

The invention is set out in appended claim 1. The dependent claims describe advantageous embodiments. Namely, the present invention relates to the following. However, the present invention includes various embodiments.

A pretreatment liquid can be used together with an aqueous inkjet ink comprising a pigment and water, wherein
the pretreatment liquid comprises a coagulant (A), a surfactant (B), a resin (C) and water,
the coagulant (A) contains at least one type selected from the group consisting of a metal salt and a cationic polymer compound, and
the surfactant (B) contains a polyoxyalkylene alkylamine represented by the following general formula (1). 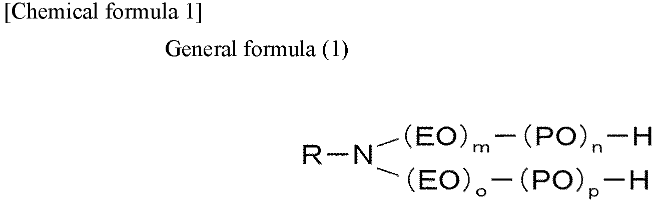 [In general formula (1),
   R represents a linear or branched alkyl group having 6 to 22 carbon atoms, a linear or branched alkenyl group having 6 to 22 carbon atoms, a linear or branched alkylcarbonyl group having 6 to 22 carbon atoms, or, a linear or branched alkenylcarbonyl group having 6 to 22 carbon atoms.
   m represents the average addition mole number of EO and is 1 to 100,
   n represents the average addition mole number of PO and is 0 to 99, and $m > n .$

When n is not 0, there are no restrictions on the addition sequence of the (EO)m and (PO)n, and the addition may be in blocks or may be random.

Further, o represents the average addition mole number of EO and is 1 to 100,
p represents the average addition mole number of PO and is 0 to 99, and $o > p .$

When p is not 0, there are no restrictions on the addition sequence of the (EO)o and (PO)p, and the addition may be in blocks or may be random.]

In the embodiment, the coagulant (A) preferably comprises a metal salt that includes at least a polyvalent metal salt. In the embodiment, the polyvalent metal salt in the coagulant (A) preferably contains a calcium salt.

In the embodiment, the surfactant (B) preferably contains a polyoxyalkylene alkylamine wherein R in the general formula (1) is a linear or branched alkyl group having 8 to 20 carbon atoms, or a linear or branched alkenyl group having 8 to 20 carbon atoms.

The pretreatment liquid of one of the embodiments preferably further contains an acetylene diol-based surfactant.

In the embodiment, the resin (C) preferably contains at least one type of resin particle selected from the group consisting of polyurethane resin particles, polyurethane polyurea resin particles, poly(meth)acrylic resin particles, acrylic-modified polyurethane resin particles, and, polyolefin resin particles.

Furthermore, the invention relates to an ink set comprising the pretreatment liquid according to claim 1 and an aqueous inkjet ink comprising a pigment and water.

Further, the invention relates to a substrate to which a pretreatment liquid has been applied, having a layer formed from the pretreatment liquid according to claim 1 on the substrate.

Furthermore, the invention relates to a printed matter obtained by printing an aqueous inkjet ink comprising a pigment and water on a substrate to which the pretreatment liquid according to claim 1 has been applied.

The disclosure of the present application relates to the subject matter described in Japanese Patent Application No. 2019-222154, filed on December 9, 2018.

### Effects of the Invention

The present invention provides a pretreatment liquid by which a printed matter having an excellent drying property and adhesion on a low absorption substrate such as a coated paper, an art paper, a lightly coated paper and a film substrate, and also an excellent image quality in which the wet-spreading is good without mixed color bleeding and color unevenness can be obtained, and furthermore, has an excellent storage stability over a long period of time. Further, the present invention also provides an ink set comprising the pretreatment liquid and an aqueous inkjet ink and which suitably expresses the aforementioned properties.

### EMBODIMENTS FOR CARRYING OUT THE INVENTION

Below, preferred embodiments will be provided to describe the invention (hereinafter, referred to simply as "the present embodiment"). However, the present invention is not limited to the following descriptions, and numerous variations are possible.

### <Pretreatment Liquid>

A pretreatment liquid containing a coagulant in order to suppress mixed color bleeding and color unevenness on a low absorption substrate, has insufficient wet-spreading after the droplets were deposited, and the filling of the printed portion tends to decrease due to the adhesion and the thickening of the ink by pigment aggregation. As the result of intensive research to ascertain the cause of these problems, the deterioration of wet-spreading was found to be due to the effects of the rate at which the coagulant dissolved and the rate of the wet-spreading of the ink after the pretreatment liquid was coated.

As previously described, in order to provide adhesion to a low absorption substrate, a pretreatment liquid comprising a resin which has conventionally been used as a binder component and a coagulant does not only have remarkably poor storage stability, but also the adhesion and the image quality of the printed matter is inferior when used together with an aqueous inkjet ink. As a result of repeated research by the present inventors to investigate the causes thereof, it was discovered that the quality deterioration was due to interactions between the hydrophilic site in the binder resin and the cationic components within the coagulant.

Furthermore, as a result of keen research, the present inventors discovered that the problems could be solved by a pretreatment liquid using a coagulant (A), a polyoxyalkylene alkylamine-based surfactant having a specific configuration as a surfactant (B) and a resin (C), and completed the present invention. This pretreatment liquid can obtain a printed matter having an excellent drying property and adhesion on a low absorption substrate, an excellent image quality in which the wet-spreading is good without mixed color bleeding and color unevenness, and furthermore, has an excellent storage stability over a long period of time. The details of the mechanism by which the problem can be preferably solved are unknown, but the present inventors provide the following conjecture.

First, with regards to the image formation on a pretreatment liquid, when the rate at which the coagulant dissolved is fast, and the pigments aggregate on the pretreatment liquid prior to the ink being sufficiently wet-spread, thus, it becomes difficult to obtain a sufficient wettability. On the other hand, when the rate at which the coagulant dissolves is slow, the ink wet-spreads sufficiently, but mixed color bleeding and color unevenness is produced between the colors, and a high quality image quality cannot be obtained.

The polyoxyalkylene alkylamine-based surfactant which can be used in the present embodiment is suitable as the compatibility between the resin and the coagulant are good so that the pretreatment liquid is uniformly coated on a low absorption substrate. Furthermore, the polyoxyalkylene alkylamine-based surfactant has the above stated suitable compatibility in the drying process after the pretreatment liquid was coated. Therefore, it is considered that the orientation of the polyoxyalkylene alkylamine-based surfactant is not inhibited by the coagulant and the resin, and is suitably oriented on the coating film surface to apply the wet-spreading of the aqueous ink. Further, when the dissolution of the coagulant is inhibited by the activator and the resin after deposition of the aqueous ink, the pigment aggregation becomes insufficient, and mixed color bleeding is likely to occur. As stated above, the activator has suitable compatibility even during the drying process, and accordingly, it is considered that the rate of pigment aggregation is optimized without the uneven distribution of the coagulant. Furthermore, due to this rate control, it is considered that the improvement of both of the wet-spreading and the mixed color bleeding is possible.

Resins exist in one of two forms: a water-soluble resin and a resin (micro)particle. These resins can be used appropriately in accordance with the characteristics required in the pretreatment liquid and the printed matter. The pretreatment liquid of the present embodiment can be suitably used with both the water-soluble resin and the resin particle.

When a water-soluble resin was used, as previously stated, the compatibility with the hydrophilic site and the cationic components of coagulant is poor, and local insolubility tends to decrease the storage stability. However, the polyoxyalkylene group acts as a hydrophilic part, thus, the polyoxyalkylene alkylamine-based surfactant which is used in the present embodiment has a good compatibility with a water-soluble resin. On the one hand, a portion of the alkylamine has a good compatibility with the cationic components of the coagulant. Therefore, it is considered that to the water-soluble resin and the coagulant are effectively compatible with each other, thereby contributing to the improvement of the stability of the pretreatment liquid.

When a resin (micro)particle was used as the resin, it is considered that a good dispersion stability can be attained even in the presence of a coagulant by the alkylamine portion of the polyoxyalkylene alkylamine-based surfactant being strongly adsorbed on the resin particle surface and a portion of the alkylene oxide groups exhibit a steric repulsion effect. Due to the effect of this kind of stabilization, it is considered that the resin and the coagulant do not exist uniformly, the original adhesion performance and drying property of the resin can be exhibited, and the deterioration of the image quality can be suppressed even after the pretreatment liquid was coated on the substrate.

As stated above, by use of the configuration in the pretreatment liquid, a printed matter having an excellent drying property and adhesion on a low absorption substrate, and, little mixed bleeding and color unevenness, good wet-spreading, and an excellent image quality can be obtained. Furthermore, a pretreatment liquid having an excellent storage stability over a long period of time can be obtained.

Below, each component constituting the pretreatment liquid of the present embodiment will be described in detail.

### <Coagulant (A)>

The pretreatment liquid of the present embodiment comprises a metal salt, and at least one type selected from the group consisting of cationic polymer compounds as the coagulant (A). As stated above, the metal salt and the cationic polymer compounds have a strong function as coagulants, a high solubility in water, and excellent diffusion characteristics in a solvent, and accordingly, are indispensable materials for solving the problem of the present invention. In the pretreatment liquid of the present embodiment, either one of the metal salt or the cationic polymer compound can be selectively used, or both may be used in combination. From the viewpoint of obtaining an excellent print quality having little mixed color bleeding and few voids, using a metal salt as the coagulant is preferable. Below, respective coagulants will be described in detail.

### <Cationic Polymer Compounds>

When a cationic polymer compound is selected as the coagulant (A), the cationic polymer to be used is not specifically limited. Any cationic polymer compound can be used as long as the compound reduces the dispersion ability of the pigments in the ink and exhibits diffusion characteristics. The cationic polymer compound may be used alone, or two or more types may be used in combination.

The solubility in 100 mL of water at 25°C can be used as an index for the "suitable solubility". Namely, the cationic polymer compound having a solubility in 100 mL of water at 25°C of no less than 5 g/100 mL H₂O is preferably used in the pretreatment liquid of the present embodiment.

The method for evaluating and determining the solubility of the cationic polymer compound will be described in detail below. A sample is prepared by thoroughly mixing 5 g of the cationic polymer compound and 100 mL of water. If the cationic polymer compound is available only in the form of an aqueous solution, as in the case for a commercially available product, the sample should be adjusted so that the solid content becomes 5 g per 100 mL of water by adding or removing water by volatilization. Subsequently, the sample is left at 25°C for 24 hours, and is deemed to be a suitable solubility if a 50% particle size is unable to be measured. Namely, it is determined that the solubility of the cationic polymer compound in 100 mL of water at 25°C is no less than 5 g/100 mL H₂O. The 50% particle size can be measured, for example, by a particle size distribution measurement device ("Microtrac UPAEX-150" manufactured by Microtrac BEL Corporation.).

Examples of cationic groups that may be comprised in the cationic polymer compound include, but are not limited to, amino groups, ammonium groups, amide groups, and -NHCONH₂. Examples of the material that may be used to introduce the cationic group to the cationic polymer compound include amine compounds such as vinyl amine, allylamine, methyl diarylamine, and ethyleneimine; amide compounds such as acrylamide, vinylformamide, and vinylacetamide; cyanamide compounds such as dicyandiamide; epihalohydrin compounds such as epifluorohydrin, epichlorohydrin, methyl epichlorohydrin, epibromohydrin, and epiiodohydrin; cyclic vinyl compounds such as vinylpyrrolidone, vinylcaprolactam, and vinylimidazole; amidine compounds; pyridinium salt compounds; and imidazolium salt compounds.

When a cationic polymer compound is used as the coagulant (A) in the pretreatment liquid of the present embodiment, the cationic polymer compound preferably contains one or more types of structural units selected from the group consisting of a diallylamine structural unit, a diallylammonium structural unit, and an epihalohydrin structural unit. The cationic polymer compounds and more preferably contains at least a diallylammonium structural unit. All of these cationic polymer compounds are strong electrolytes, the dissolution stability of the cationic polymer compound in the pretreatment liquid is good, and are highly capable of reducing the dispersion of the pigment in the ink.

Among them, a cationic polymer compound comprising the diallylammonium structural unit is preferable as it can exhibit a particularly excellent aggregation performance and provides a printed matter showing little mixed color bleeding and color unevenness on a low absorption substrate, and has excellent color development. From the viewpoint of ease of availability and the like, a hydrochloride salt or ethyl sulfate salt of diallyl dimethyl ammonium or diallyl methyl ethyl ammonium can be suitably used as a diallylammonium structural unit.

On the one hand, although the reasons are not clear, the case when a cationic polymer compound comprising an epihalohydrin structural unit was used is ideal in the point that a printed matter having excellent water resistance can be obtained. Examples of a cationic polymer compound comprising an epihalohydrin structural unit include epihalohydrin-modified polyamine compounds, epihalohydrin-modified polyamide compounds, epihalohydrin-modified polyamide-polyamine compounds, and epihalohydrin-amine copolymers. From the viewpoint of ease of availability and the like, epichlorohydrin or methylepichlorohydrin can be suitably used as the epihalohydrin.

The cationic polymer compounds may be synthesized by any known synthesis methods, or commercially available products may be used. Examples of the commercially available products of the cationic polymer compounds comprising the diallylamine structural unit include PAS-21 CL, PAS-21, PAS-M-1L, PAS-M-1, PAS-M-1A, PAS-92, and PAS-92A (manufactured by Nittobo Medical Co., Ltd.); and Unisence KCA100L and KCA101L (manufactured by Senka Corporation). Examples of commercially available products of the cationic polymer compounds comprising the diallylammonium structural unit PAS-H-1L, PAS-H-SL, PAS-H-10L, PAS-24, PAS-J-81L, PAS-J-81, and PAS-J-41 (manufactured by Nittobo Medical Co., Ltd.); and Unisence FPA100L, FPA101L, FPA102L, FPA1000L, FPA1001L, FPA1002L, FCA1000L, FCA1001L, and FCA5000L (manufactured by Senka Corporation). Examples of the commercially available products of the cationic polymer compounds comprising both the diallylamine structural unit and the diallylammonium structural unit include PAS-880 (manufactured by Nittobo Medical Co., Ltd.).

Examples of commercially available products of the epihalohydrin structural unit include FL-14 (manufactured by SNF), Arafix 100, 251S, 255, and 255LOX (manufactured by Arakawa Chemical Industries, Ltd.); DK-6810, 6853, and 6885; WS-4010, 4011, 4020, 4024, 4027, and 4030 (manufactured by Seiko PMC Corporation), Papyogene P-105 (manufactured by Senka Corporation); Sumirez Resin 650 (30), 675A, 6615, and SLX-1 (manufactured by Taoka Chemical Co., Ltd.), Catiomaster PD-1, 7, 30, A, PDT-2, PE-10, PE-30, DT-EH, EPA-SK01, and TMHMDA-E (manufactured by Yokkaichi Chemical Co., Ltd.), and Jetfix 36N, 38A, and 5052 (manufactured by Satoda Chemical Industrial Co., Ltd.).

When a cationic polymer compound is used as the coagulant (A) in the pretreatment liquid of the present embodiment, the blending amount thereof is, in terms of the solid content, preferably from 1 to 30 wt % relative to the total amount of the pretreatment liquid. The blending amount is more preferably from 3 to 20% by mass, and from 5 to 15% by mass is particularly preferable. When the blending amount of the cationic polymer compounds is within the aforementioned range, the viscosity of the pretreatment liquid can be maintained within a suitable range, and a pretreatment liquid having excellent long term storage stability can be easily obtained.

### <Metal Salt>

When a metal salt is selected as the coagulant (A), the metal salt to be used is not specifically limited. In the same manner as the case of a cationic polymer compound, the any metal salt may be used which reduces the dispersion of pigment in the ink, and, exhibits a suitable solubility and diffusion characteristics. The metal salt may be used alone, or two or more types may be used in combination.

In the pretreatment liquid of the present embodiment, the type of metal salt is not particularly limited as long as it is composed of a metal ion and an anion bonding to the metal ion. From the viewpoint of suppressing mixed color bleeding by interacting instantaneously with the pigment, and obtaining a sharp image without color unevenness, a metal salt comprising a polyvalent metal salt is preferable. From the viewpoint of facilitating interaction not only with the pigments but also with the solid components such as the resin, the metal salt more preferably contains, as polyvalent metal ions, at least one type selected from the group consisting of Ca²⁺, Mg²⁺, Zn²⁺, Al³⁺, Fe²⁺, and Fe³⁺. Among them, a polyvalent metal ion selected from the group consisting of Ca²⁺, Mg²⁺, Zn²⁺, and Al³⁺ is particularly preferable as these metal ions have a strong ionization tendency and readily produce cations, and thus, has the advantageous point of producing a more significant aggregation effect. Furthermore, Ca²⁺ ion has a small ionic radius and can migrate more readily within the ink aggregation layer and the ink droplets, and therefore, is extremely preferable.

The metal salts include inorganic metal salts and organic metal salts. Examples of the inorganic metal salt include, but are not limited to calcium chloride, magnesium chloride, aluminum chloride, calcium bromide, magnesium bromide, calcium nitrate, magnesium nitrate, magnesium sulfate, aluminum sulfate, calcium carbonate, and magnesium carbonate.

Examples of the organic metal salts include, but are not limited to calcium salts, magnesium salts, nickel salts, zinc salts, and the like of organic acids such as pantothenic acid, propionic acid, ascorbic acid, acetic acid, and lactic acid.

Among these metal salts, calcium nitrate, calcium formate, calcium lactate and calcium acetate are more preferable from the viewpoint of solubility in water, and interaction with the components of the ink.

The content of the metal salt, as the metal ion, in the pretreatment liquid of the present embodiment is preferably 0.25 to 8.0% by mass relative to the total amount of the pretreatment liquid, more preferably 0.75 to 6.5% by mass, and 1.0 to 5% by mass is particularly preferable. By adjusting the content of the metal ion to within the aforementioned range, the mixed bleeding and the color unevenness can be suppressed, and on the other hand, the wettability of the pretreatment liquid on the substrate can be ensured. Further, this content is also preferable because the optimal drying property can be expressed without the excessive occurrence of the phenomenon of an increase in the boiling point caused by the metal salt. The content of the metal ion relative to the total amount of the pretreatment liquid is obtained from the following formula (2).$\left(Content of metal ion\right) \left(% by mass\right) = WC \times MM \div MC$

In general formula (2), WC represents the content (% by mass) of the metal salt relative to the entire amount of the pretreatment liquid, MM represents the molecular weight of the metal ion constituting the metal salt, and MC represents the molecular weight of the metal salt.

### <Surfactant (B)>

The surfactant (B) used in the pretreatment liquid of the present embodiment contains the polyoxyalkylene alkylamine represented by the following general formula (1) as previously explained.

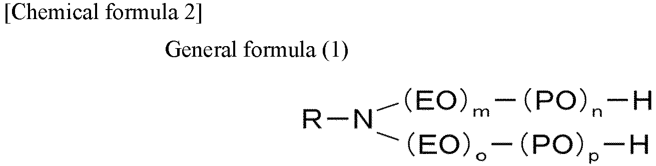

In general formula (1), the portion represented by R functions as a hydrophobic group. If the number of carbon atoms is between 6 and 22, the interaction between the aforementioned resins functions well. Further, the wettability of the ink on the pretreatment liquid surface after being coated on the substrate improves and an excellent print quality having few voids can be obtained. The R may be branched or may be a straight chain.

From the viewpoint of even more favorably expressing the effect, R is preferably 8 to 20 carbon atoms, and more preferably 10 to 18 carbon atoms. R is preferably an alkyl group or an alkenyl group, and an alkyl group is particularly preferable.

In general formula (1), the average addition mole number (m and o in general formula (1) of the ethylene oxide group are 1 to 100, and the average addition mole number (n and p in general formula (1) of the propylene oxide group are 0 to 99, m > n, and o > p.

As stated above, in formula (1), the alkylene oxide groups function as hydrophilic groups, and increase the compatibility between the water-soluble resin and the coagulant. Further, the alkylene oxide groups function as a steric repulsion group after being deposited on the resin particles. From the viewpoint of preferably expressing these effects, the average addition mole number of the ethylene oxide group which has a strong hydrophilicity compared to the propylene oxide group is preferably 1 or more, and, the average addition mole number of the propylene oxide group which has a weak hydrophilicity is preferably lower than the average addition mole number of the ethylene oxide group. Further, when the average addition mole number of the ethylene oxide group was no more than 100, and, the average addition mole number of the propylene oxide group was no more than 99, the storage stability can be easily improved while maintaining adhesion to the low absorption substrate.

From the viewpoint of suitably expressing the properties, in the pretreatment liquid according to the invention, the blending amount of the polyoxyalkylene alkylamine represented by the general formula (1) is 0.5 to 100% by mass relative to the blending amount of the resin (C). The blending amount is preferably 2 to 85% by mass, and 5% by mass to 80% by mass is particularly preferable. When the blending amount of the polyoxyalkylene alkylamine is within the aforementioned range, a good storage stability of the pretreatment liquid can be easily obtained. Furthermore, the coagulant is preferably compatible with the resin, so that a uniform aggregation layer can be formed. Therefore, not only is the bleeding between colors and mixed color suppressed, but it is also possible to improve the wettability of the ink after coating the pretreatment liquid, and to obtain an excellent print quality without voids.

The blending amount of the surfactant (B) in the pretreatment liquid of the present embodiment is preferably, in terms of the solid content, 0.05 to 10% by mass relative to the total amount of the pretreatment liquid. The blending amount is more preferably 0.1 to 7% by mass, and 0.2 to 5% by mass is particularly preferable. When the blending amount of the surfactant (B) was adjusted to within the aforementioned range, it is possible to easily obtain storage stability of the pretreatment liquid and an excellent print quality.

The polyoxyalkylene alkylamine may be synthesized by any known synthesis methods, or commercially available products may be used. Examples of the commercially available products include the Liponol series (manufactured by Lion Corporation), the Nymeen series (manufactured by Nof Corporation), the Blaunon series manufactured by Aoki Oil Industrial Co., Ltd.), and the Amiet series (manufactured by Kao Corporation), but the commercially available products are not limited thereto.

The pretreatment liquid of the present embodiment may also include other surfactants to the range which does not reduce the performance. Examples of the other surfactants include siloxane-based, fluorine-based, acetylene diol-based, and acrylic-based surfactants. In terms of having excellent wettability to a low absorption substrate, and forming a uniform pretreatment liquid layer, an acetylene diol-based surfactant is comprised in the pretreatment liquid according to the invention. According to the invention the HLB value of the acetylene diol-based surfactant is 4 to 14, the HLB value of the acetylene diol-based surfactant is particularly preferably 6 to 14. This type of acetylene diol-based surfactant is preferably used together with a polyoxyalkylene alkylamine in the pretreatment liquid. As a result, the effect of the coagulant (A) and the resin (C) can be sufficiently expressed, and an excellent print quality can be obtained on a low absorption substrate.

The HLB (Hydrophile-Lipophile Balance) value is one parameter indicating the hydrophilicity and the hydrophobicity of a material. Regarding the HLB value, the smaller the value, the larger the hydrophobicity of a material, and the higher the value, the higher the hydrophilicity of a material. Calculation methods of the HLB value include various methods such as the Griffin method, the Davies' method, and the Kawakami method. Further, various method for accurately measuring the HLB value are known. In the specification of the present application, when the structure of the compound is clearly known, the Griffin method is used to calculate the HLB value. The Griffin method is a method which uses the molecular structure and molecular weight of the target material to calculate the HLB value using the following formula (3). 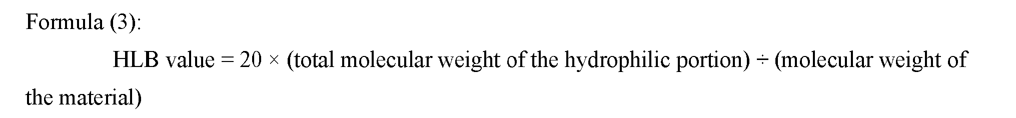 HLB value = 20 × (total molecular weight of the hydrophilic portion) ÷ (molecular weight of the material)

On the other hand, when the surfactant contains a compound having an unknown structure, the HLB value of a surfactant can be determined experimentally, for example using the method disclosed on page 324 of "The Surfactant Handbook" (edited by Ichiro Nishi et al., Sangyo-Tosho Publishing Co. Ltd., 1960). Specifically, 0.5 g of the surfactant is dissolved in 5 ml of ethanol. Next, while stirring the solution at 25°C, a titration is performed with a 2% by weight aqueous solution of phenol, and the point where the solution becomes cloudy is deemed the end point. If the amount of the aqueous solution of phenol required to reach the end point is deemed A (mL), then the HLB value can be calculated using the following formula (4).$HLB value = 0.89 \times A + 1.11$

### <Resin (C)>

The pretreatment liquid of the present embodiment is characterized in comprising a resin (C). A resin which is not associated with the reaction between the inkjet ink and the treatment liquid is used as the resin. By using a resin in the pretreatment liquid, the adhesion to a low absorption substrate and the drying property can improve, and the abrasion resistance of the printed matter can improve, and accordingly, the printed matter can be used in a variety of different applications. In general, water-soluble resins and resin microparticles are known as resins. Either of these resins may be used in the pretreatment liquid of the present embodiment. In terms of improving the adhesion to a low absorption substrate, and obtaining an excellent drying property and coating film durability, resin particles are preferably used.

The term "resin particle" in the specification of the present application means particles having a particle size measured by the method described below of 5 to 1,000 nm.

The particle size of the resin particles in the specification of the present application indicates the 50% particle size (D50) of the resin particles. The 50% particle size (D50) is the particle size at 50% (the median size) in a volume-based cumulative distribution measured by the dynamic light scattering method using a particle size distribution analyzer (for example, a Microtrac UPAEX-150 manufactured by Microtrac BEL Corporation). From the viewpoint of ensuring the adhesion to the substrate and long term storage stability, the 50% particle size (D50) of the resin particle is preferably 5 to 350 nm. The 50% particle size (D50) of resin particle is more preferably 10 to 300 nm, and 25 to 250 nm is particularly preferable.

The content of the resin (C) is preferably determined by the amount of the metal ion. Specifically, the mass ratio of the content of the resin (C) relative to the content of the metal ion contained in the pretreatment liquid is such that the content of the resin (C) relative to the content of one metal ion is preferably greater than 0 to less than 30, and greater than 0 to less than 25 is particularly preferable. When in the aforementioned range, the substrate coated with the pretreatment liquid can absorb moisture, and can easily suppress decreases in the drying property and the adhesion. Therefore, a high quality printed matter having an excellent drying property and adhesion can be obtained with a low absorption substrate.

In the pretreatment liquid of the present embodiment, the blending amount of the resin (C), in terms of the solid content, is preferably 0.5 to 30% by mass relative to the total amount of the pretreatment liquid, and more preferably 1 to 25% by mass. 2 to 20% by mass is particularly preferable. When the blending amount is within the aforementioned range, a printed matter with an excellent drying property and having excellent adhesion can be obtained with a low absorption substrate.

The resin (C) is not specifically limited. Specific examples of the resin which can be used includes polyethyleneimines, polyamides, various quaternary ammonium salt group-containing water-soluble resins, polyacrylamides, polyvinylpyrrolidones, polyalkylene oxides, starches, water-soluble celluloses such as methyl cellulose, hydroxy cellulose, carboxymethyl cellulose, hydroxymethyl cellulose, hydroxypropyl cellulose and hydroxypropyl methylcellulose, polyvinyl methyl ethers, polyvinyl acetals, and, polyvinyl alcohols, and modified products of the above resins, polyurethane resins, polyurea resins, polyurethane urea resins, (meth)acrylic resins, acrylic-modified polyurethane resins, styrene-(meth)acrylic resins, styrene-maleic acid (anhydride) resins, rosin-modified maleic acid resins, polyolefin resins, polyester resins, polyether resins, and polycarbonate resins, but are not limited thereto.

Among these resins, in one embodiment, at least one type selected from the group consisting of polyvinyl alcohols, polyurethane resins, polyurea resins, polyurethane urea resins, (meth)acrylic resins, acrylic-modified polyurethane resins, styrene-(meth)acrylic resins, styrene-maleic acid (anhydride) resins, polyolefin resins, polyester resins, polyether resins, and polycarbonate resins is preferable. These resins are preferable from the viewpoint of obtaining a printed matter having a suitable compatibility with the surfactant (B) used in the pretreatment liquid and adsorption stability, excellent long term storage stability, and excellent mixed color bleeding and wet-spreading.

The pretreatment liquid of the present embodiment may use one type of resin (C) listed above, or two or more may be used together. In one embodiment, the pretreatment liquid preferably comprises two or more resin particles selected from the group consisting of polyurethane resins, polyurethane polyurea resins, poly(meth)acrylic resins, acrylic-modified polyurethane resins and polyolefin resins. The combined use of resin particles with different properties and types makes it easy to suitably improve the adhesion and the drying property of the printed matter and the storage stability of the pretreatment liquid.

The resin (C) may use a synthetic product obtained by a well-known synthesis method, or commercially available products may be used. Examples of the commercially available products include the PARASOL series (manufactured by Ohara Paragium Chemical Co., Ltd.); the UCOAT series and PERMARIN series (both manufactured by Sanyo Chemical Industries, Ltd.); the SUPERFLEX series and SUPERFLEX E series (both manufactured by DKS Co., Ltd.); the WBR series (manufactured by Taisei Fine Chemical Co., Ltd.); the HYDRAN series (manufactured by DIC Corporation); the HITEC series (manufactured by Toho Chemical Industry Co., Ltd.); the SUPERCHLON series and AUROREN series (both manufactured by Nippon Paper Industries Co., Ltd.); the Nichigo-Polyester series (manufactured by The Nippon Synthetic Chemical Industry Co., Ltd.); the AQUACER series and Hordamer series (both manufactured by BYK-Chemie GmbH); the TAKELAC series (manufactured by Mitsui Chemicals, Inc.); the PASCOL series (manufactured by Meisei Chemical Works, Ltd.); the ARROWBASE series (manufactured by Unitika Ltd.); the NeoCryl series (manufactured by DSM Coating Resins); the NeoRez series (manufactured by DSM Coating Resins); the ADEKA BONTIGHTER HUX series (manufactured by ADEKA Corporation); the UREARNO series (manufactured by Arakawa Chemical Industries, Ltd.) and the like. The aforementioned resins can be used preferably, but are not limited thereto.

The acid value of resin (C) is preferably 0 to 40 mgKOH/g. From the viewpoint of ensuring long term storage stability, an acid value of 0 to 35 mgKOH/g is even more preferable. If the acid value exceeds 40 mgKOH/g, there is the risk that the storage stability is impaired and the print quality decreases. The acid value of the resin represents the number of mg of potassium hydroxide (KOH) required to neutralize the acid contained in 1 g of the resin, and can be measured by potentiometric titration using a known device. Specifically, the acid value is a value obtained by titration in a mixed solvent of ethanol and toluene using a KOH solution using, for example, an "Automatic Potentiometric Titrator AT-610" manufactured by Kyoto Electronics Manufacturing Co., Ltd.

Any anionic, cationic, amphoteric, or nonionic resin can be preferably used as the resin. From the viewpoint of expressing an excellent adhesion to a low absorption substrate, a nonionic resin or an anionic resin is preferably used, and the use of anionic resin particles is particularly preferable. The term "anionic" in the specification of the present application means a substance having a negative charge in water, specifically, a substance in which the acid value is no less than 1 mgKOH/g.

### <Water>

The content of water contained in the pretreatment liquid of the present embodiment is preferably 30 to 95% by mass relative to the total amount of the pretreatment liquid, more preferably 40 to 90% by mass, and 50 to 85% by mass is even more preferable. Water increases the mutual solubility of the materials contained in the pretreatment liquid of the present embodiment such as the coagulant (A), the surfactant (B) and the resin (C), and can improve the storage stability of the pretreatment liquid.

### <Organic Solvent>

The pretreatment liquid of the present embodiment may further comprise an organic solvent. By using together with an organic solvent, the solubility of the coagulant (A) and the surfactant, and the drying property and the wettability of the pretreatment liquid can be suitably adjusted. In the pretreatment liquid of the present embodiment, one organic solvent can be used alone, or two or more organic solvents can be used together.

The organic solvent which can be used in the pretreatment liquid of the present embodiment is not specifically limited, but comprising a water-soluble organic solvent is preferable. Note that, the term "water-soluble organic solvent" in the specification of the present application means a liquid at 25°C, and, the solubility in water at 25°C is no less than 1% by mass.

When the pretreatment liquid of the present embodiment contains an organic solvent, from the viewpoint of increasing the affinity among the coagulant (A), the surfactant (B), and the resin (C), and improving the storage stability of the pretreatment liquid, the use of a water-soluble organic solvent containing at least one hydroxyl group within the molecular structure is more preferable. **In** one embodiment, the use of the monohydric alcohols and/or dihydric alcohols (glycols) listed below as is particularly preferable.

**In** an embodiment, a water-soluble organic solvent in which the boiling point at one atmosphere is 75 to 220°C is preferable as the water-soluble organic solvent containing at least one hydroxyl group within the molecular structure. The pretreatment liquid comprising this kind of water-soluble organic solvent can be uniformly applied to a low absorption substrate, and is preferred as it specifically improves the adhesion and the image quality. Furthermore, from the viewpoint of even more favorably expressing the effect, the boiling point at one atmosphere of the water-soluble organic solvent containing at least one hydroxyl group within the molecular structure is more preferably 75 to 205°C, and even more preferably 75 to 190°C. In the specification of the present application, the boiling point at one atmosphere refers to a value measured by conventional methods such as a differential thermal analysis (DTA) method or a DSC method.

Examples of the water-soluble organic solvent containing at least one hydroxyl group within the molecular structure that can be suitably used in the pretreatment liquid include
monohydric alcohols such as methanol, ethanol, 1-propanol, 2-propanol, 1-butanol and 2-butanol;
dihydric alcohols (glycols) such as 1,2-ethanediol, 1,2-propanediol, 1,3-propanediol, 1,2-butanediol, 1,3-butanediol, 1,4-butanediol, 1,2-pentanediol, 1,5-pentanediol, 1,2-hexanediol, 1,6-hexanediol, 1,2-heptanediol, 2,2-dimethyl-1,3-propanediol, 2-methyl-1,3-propanediol, 2-ethyl-2-methyl-1,3-propanediol, 3-methyl-1,3-butanediol, 3-methyl-1,5-pentanediol, 2-methyl-2-propyl-1,3-propanediol, 2-methylpentane-2,4-diol, 2-ethyl-1,3-hexanediol, 1,2-octanediol, diethylene glycol, triethylene glycol, tetraethylene glycol, polyethylene glycol #200, polyethylene glycol #400, dipropylene glycol, tripropylene glycol and dibutylene glycol;
glycol monoalkyl ethers such as ethylene glycol monoethyl ether, ethylene glycol monobutyl ether, diethylene glycol monomethyl ether, diethylene glycol monoethyl ether, diethylene glycol monopropyl ether, diethylene glycol monobutyl ether, diethylene glycol monopentyl ether, diethylene glycol monohexyl ether, triethylene glycol monomethyl ether, triethylene glycol monoethyl ether, triethylene glycol monopropyl ether, triethylene glycol monobutyl ether, tetraethylene glycol monomethyl ether, tetraethylene glycol monoethyl ether, tetraethylene glycol monobutyl ether, dipropylene glycol monopropyl ether, tripropylene glycol monomethyl ether, tripropylene glycol monoethyl ether, 1,2-butylene glycol monomethyl ether and 1,3-butylene glycol monomethyl ether; and
chain polyol compounds such as glycerin, trimethylolpropane, 1,2,4-butanetriol, 1,2,6-hexanetriol, diglycerin and polyglycerin.

Further, the pretreatment liquid of the present embodiment may contain an organic solvent other than those listed above. Examples of other solvents that may be used include:
glycol dialkyl ethers such as diethylene glycol dimethyl ether, diethylene glycol methyl ethyl ether, diethylene glycol butyl methyl ether, diethylene glycol diethyl ether, triethylene glycol dimethyl ether, triethylene glycol methyl ethyl ether, triethylene glycol butyl methyl ether, triethylene glycol diethyl ether, tetraethylene glycol dimethyl ether, tetraethylene glycol methyl ethyl ether, tetraethylene glycol butyl methyl ether and tetraethylene glycol diethyl ether;
nitrogen-containing solvents such as 2-pyrrolidone, N-methylpyrrolidone, N-ethylpyrrolidone, ε-caprolactam, 3-methyl-2-oxazolidinone, 3-ethyl-2-oxazolidinone, N,N-dimethyl-β-methoxypropionamide, N,N-dimethyl-β-ethoxypropionamide, N,N-dimethyl-β-butoxypropionamide, N,N-dimethyl-β-pentoxypropionamide, N,N-dimethyl-β-hexoxypropionamide, N,N-dimethyl-β-heptoxypropionamide, N,N-dimethyl-β-2-ethylhexoxypropionamide, N,N-dimethyl-β-octoxypropionamide, N,N-diethyl-β-butoxypropionamide, N,N-diethyl-β-pentoxypropionamide, N,N-diethyl-β-hexoxypropionamide, N,N-diethyl-β-heptoxypropionamide and N,N-diethyl-β-octoxypropionamide; and
heterocyclic compounds such as γ-butyrolactone, γ-valerolactone, δ-valerolactone, and ε-caprolactone.

The total blending amount of the organic solvent contained in the pretreatment liquid of the present embodiment is preferably 0.5 to 45% by mass relative to the total amount of the pretreatment liquid, more preferably 1 to 35% by mass, and 2 to 30% by mass is particularly preferable. When the blending amount of the organic solvent is within the aforementioned range, it is possible to easily obtain a pretreatment liquid which exhibits a superior wettability relative to a low absorption substrate, and a pretreatment liquid which can ensure storage stability over a long period of time.

When a water-soluble organic solvent containing at least one hydroxyl group is used as the organic solvent, the blending amount thereof is preferably 35 to 100% by mass relative to the total amount of organic solvent, more preferably 50 to 100% by mass, and 65 to 100% by mass is particularly preferable. When the blending amount is adjusted to be in the aforementioned range, it is easy to preferably express the effect due to the water-soluble organic solvent containing at least one hydroxyl group.

In the pretreatment liquid of the present embodiment, the content of the organic solvent having a boiling point at one atmosphere is 240°C or higher, but is preferably less than 10% by mass relative to the total amount of the pretreatment liquid. The content of the organic solvent is more preferably less than 5% by mass, and may be 0% by mass. When the blending amount is free of any or includes an organic solvent having a boiling point of 240°C or higher within the aforementioned range, a printed matter having an excellent image quality can be easily obtained, and a sufficient drying property of the pretreatment liquid can be easily obtained.

For the same reason as stated above, in addition to the content of the organic solvent having a boiling point at one atmosphere of 240°C or higher being less than 10% by mass relative to the total amount of the pretreatment liquid, the content of the organic solvent having a boiling point at one atmosphere is 220°C or higher is preferably less than 15% by mass relative to the total amount of the pretreatment liquid. The content of the organic solvent in which the boiling point is 220°C or higher is more preferably less than 10% by mass, less than 5% by mass is particularly preferable and may be 0% by mass.

### <pH Adjusting Agent>

The pretreatment liquid of the present embodiment may contain a pH adjusting agent. By using a pH adjusting agent, damage to the member used in the coating apparatus can be suppressed. Further, variation in the pH over time can be suppressed, so that the performance of the pretreatment liquid can be maintained for a long period of time, and the storage stability can be maintained and improved. The materials that can be used as the pH adjusting agent are not specifically limited. The pH adjusting agent may be used alone, or a combination of two or more materials may be used.

When making the pretreatment liquid basic, examples of materials that may be used as the pH adjuster include alkanolamines such as dimethylethanolamine, diethanolamine, triethanolamine and N-methyldiethanolamine:
ammonia water:
alkali metal hydroxides such as lithium hydroxide, sodium hydroxide and potassium hydroxide: and
alkali metal carbonates such as lithium carbonate, sodium carbonate, sodium hydrogen carbonate and potassium.

Further, when making the pretreatment liquid acidic, examples of materials that may be used as the pH adjuster include hydrochloric acid, sulfuric acid, acetic acid, citric acid, maleic acid, maleic anhydride, succinic acid, tartaric acid, malic acid, phosphoric acid, boric acid, fumaric acid, malonic acid, ascorbic acid and glutamic acid.

One of the pH adjusting agents may be used alone, or a combination of two or more pH adjusters may be used.

The blending amount of the pH adjuster, relative to the total mass of the pretreatment liquid, is preferably from 0.01 to 5% by mass, and more preferably from 0.1 to 4.5% by mass. When the blending amount of the pH adjusting agent is adjusted to within the aforementioned range, pH variation caused by external stimuli such as the dissolution of atmospheric carbon dioxide can be reduced, and the effects due to the coagulant (A), the surfactant (B), and the resin (C) can be easily expressed.

### <Colorant>

In a preferred embodiment, the pretreatment liquid contains substantially no colorants such as pigments or dyes. By using a substantially transparent pretreatment liquid, a printed matter which retains the characteristic color or transparency of the substrate can be obtained. In the specification of the present application, the expression "contains substantially no" means that a material intentionally added in an amount that impairs the effects of the present embodiment is excluded. For example, materials for which there are unintended inclusions such as impurities and/or by-products are not excluded. Specifically, the expression means that the material, relative to the total mass of the pretreatment liquid, is not more than 2.0% by mass, preferably not more than 1.0% by mass, even more preferably not more than 0.5% by mass, and particularly preferably 0.1% by mass or less.

In another preferred embodiment, the pretreatment liquid contains a white pigment as the colorant. By using a white pretreatment liquid on colored and/or transparent substrates, a printed matter having excellent clarity and legibility can be obtained. When the pretreatment liquid of the present embodiment contains a white pigment, any conventionally known material may be used as the white pigment. Specific examples of materials that can be used include inorganic oxides such as titanium oxide, zinc oxide and zirconium oxide; water-insoluble inorganic salts such as strontium titanate and barium sulfate; and water-dispersible resin (micro) particles such as hollow resin particles and nonhollow resin particles.

### <Other Materials>

In order to achieve certain desired physical properties, additives such as anti-foaming agents, thickeners, and if necessary preservatives can be appropriately used in the pretreatment liquid of the present embodiment. When these additives are used, the blending amount relative to the total amount of the pretreatment liquid is preferably from 0.01 to 5% by mass, and more preferably from 0.01 to 3% by mass. If the additives are included in excess, there is a possibility that the functions of the coagulant (A) and the surfactant (B) in the pretreatment liquid may be impaired, thus, the added amount of the additives is adjusted to within the aforementioned range.

The pretreatment liquid of the present embodiment preferably contains substantially no polymerizable monomers.

### <Physical Properties of Pretreatment Liquid>

The viscosity of the pretreatment liquid of the present embodiment at 25°C is preferably from 5 to 200 mPa·s, more preferably from 5 to 180 mPa·s, even more preferably from 8 to 160 mPa·s, and particularly preferably from 10 to 140 mPa·s. The pretreatment liquid satisfying the aforementioned viscosity range may be uniformly applied to the substrate, thus, a printed matter having an excellent image quality and adhesion can be easily obtained. The viscosity of the pretreatment liquid was measured using an E-type viscometer (TVE25L viscometer, manufactured by Toki Sangyo Co., Ltd.).

From the viewpoint of obtaining a printed matter having an excellent image quality, by imparting a suitable wettability on a low absorption substrate and forming a uniform pretreatment liquid layer, the static surface tension of the pretreatment liquid is preferably from 20 to 45 mN/m, more preferably from 22 to 40 mN/m, and particularly preferably from 25 to 35 mN/m. In the present description, the static surface tension is the value measured at 25°C based on the Wilhelmy method (plate method, vertical plate method). The static surface tension can be measured, for example, using an automatic surface tension meter CBVP-Z (manufactured by Kyowa Interface Science Co., Ltd.) and a platinum plate.

### <Method for Producing Pretreatment Liquid>

The pretreatment liquid of an embodiment consisting of the aforementioned components is produced by adding, for example, the coagulant (A), the surfactant (B), and the resin (C), and an organic solvent, a pH adjusting agent, and if necessary any of the additive components previously exemplified, stirring and mixing, and then if necessary filtering the resulting mixture. However, the method for producing the pretreatment liquid is not limited thereto. For example, when a white pigment is used as a colorant, a white pigment dispersion containing the white pigment and water is prepared in advance and subsequently this dispersion may be mixed with the coagulant (A), the surfactant (B), and the resin (C).

When stirring and mixing, if necessary the mixture may also be heated to within a range from 35 to 100°C.

### <Ink Set>

The pretreatment liquid of the present embodiment may be used in the form of an ink set, by combining with at least one aqueous inkjet ink. The structural elements of the aqueous inkjet ink (hereinafter, simply referred to as "the aqueous inkjet ink (aqueous ink or ink) of the present embodiment") constituting the ink set are described below as one embodiment of the present invention.

### <Pigment>

From the viewpoints of having water resistance, light resistance, weather resistance and gas resistance, the aqueous inkjet ink of the present embodiment may contain a pigment as a colorant. A known organic pigment or inorganic pigment may be used as the pigment.

The content of these pigments is preferably within a range from 2 to 20% by mass, more preferably from 2.5 to 15% by mass, and particularly preferably from 3 to 10% by mass, relative to the total mass of the aqueous ink.

In the case of a white ink, the content of the pigment, relative to the total amount of white ink is preferably from 3.0 to 40% by mass, more preferably from 5.0 to 35% by mass, and particularly preferably from 7.0 to 30% by mass.

When the content of the pigment is adjusted to be no less than 2.0% by mass (at least 3% by mass in the case of a white ink), the printed matter having a satisfactory color development and clarity can be easily obtained. When the content of the pigment is adjusted to be no more than 20% by mass (no more than 40% by mass in the case of a white ink), the viscosity of the aqueous ink can be stored in a range suitable for inkjet printing, and the storage stability of the aqueous ink becomes good, and as a result, the discharge stability can be ensured over a long period of time.

Examples of cyan organic pigments that can be used in the aqueous ink include C.I. Pigment Blue 1, 2, 3, 15:3, 15:4, 15:6, 16, 22, 60, 64 and 66. Among them, in terms of an excellent color development and light resistance, the use of one or more pigments selected from the group consisting of C.I. Pigment Blue 15:3 and 15:4 is preferred.

Further, examples of magenta organic pigments include C.I. Pigment Red 5, 7, 12, 22, 23, 31, 48 (Ca), 48 (Mn), 49, 52, 53, 57 (Ca), 57:1, 112, 122, 146, 147, 150, 185, 202, 209, 238, 242, 254, 255, 266, 269 and 282, and C.I. Pigment Violet 19, 23, 29, 30, 37, 40, 43 and 50. Among them, in terms of an excellent color development and light resistance, the use of one or more pigments selected from the group consisting of C.I. Pigment Red 122, 150, 166, 185, 202, 209, 266, 269 and 282, and C.I. Pigment Violet 19 is preferred.

From the viewpoint of further enhancing the color development, a solid solution pigment containing a quinacridone pigment as the magenta pigment is also preferably used. Specifically, a solid solution pigment containing C.I. Pigment Red 122 and C.I. Pigment Violet 19, a solid solution pigment containing C.I. Pigment Red 202 and C.I. Pigment Violet 19, a solid solution pigment containing C.I. Pigment Red 209 and C.I. Pigment Violet 19, a solid solution pigment containing C.I. Pigment Red 282 and C.I. Pigment Violet 19, a solid solution pigment containing C.I. Pigment Red 122 and C.I. Pigment Red 150, a solid solution pigment containing C.I. Pigment Red 122 and C.I. Pigment Red 185, and a solid solution pigment containing C.I. Pigment Red 122 and C.I. Pigment Red 269 can be used.

Further, examples of yellow organic pigments include C.I. Pigment Yellow 12, 13, 14, 17, 20, 24, 74, 83, 86, 93, 94, 95, 109, 110, 117, 120, 125, 128, 137, 138, 139, 147, 148, 150, 151, 154, 155, 166, 168, 180, 185 and 213. Among them, in terms of having an excellent color development, the use of one or more pigments selected from the group consisting of C.I. Pigment Yellow 12, 13, 14, 74, 120, 180, 185 and 213 is preferred.

Further, examples of black organic pigments include aniline black, Lumogen black and azomethine azo black. Note that, a plurality of color pigments such as the cyan pigments, magenta pigments and yellow pigments described above, and the orange pigments, green pigments and brown pigments described below may also be mixed together to form a black pigment.

Special colors such as orange pigments, green pigments and brown pigments may also be used in the aqueous inkjet ink of the present embodiment. Specific examples include C.I. Pigment Orange 16, 36, 43, 51, 55, 59, 61, 64 and 71, C.I. Pigment Green 7, 36, 43 and 58, and Pigment Brown 23, 25 and 26.

The inorganic pigment which can be used in the aqueous inkjet ink of the present embodiment is not specifically limited. For example, carbon blacks and iron oxide may be used as a black pigment, and titanium oxide may be used as a white pigment.

Examples of carbon blacks which can be used in the aqueous ink of the present embodiment include furnace black, channel black and acetylene black. Among them, carbon blacks having a primary particle size of 11 to 50 nm, a specific surface area measured by the BET method of 50 to 400 m²/g, a volatile fraction of 0.5 to 10% by mass, and a pH of 2 to 10 are preferred.

Examples of commercially available products having these types of properties include No. 25, 30, 33, 40, 44, 45, 52, 850, 900, 950, 960, 970, 980, 1000, 2200B, 2300, 2350 and 2600; and MA7, MA8, MA77, MA100 and MA230 (all manufactured by Mitsubishi Chemical Corporation); RAVEN 760UP, 780UP, 860UP, 900P, 1000P, 1060UP, 1080UP and 1255 (all manufactured by Columbian Carbon Company); REGAL 330R, 400R, 660R and MOGUL L (all manufactured by Cabot Corporation); Nipex 160IQ, 170IQ, 35 and 75; PrinteX 30, 35, 40, 45, 55, 75, 80, 85, 90, 95 and 300; Special Black 350 and 550; and Nerox 305, 500, 505, 600 and 605 (all manufactured by Orion Engineered Carbons S.A.).

Either the anatase form or the rutile form of titanium oxide may be used. From the viewpoint of improving the opacity of the printed matter, use of the rutile form is preferred. Further, the production method of titanium oxide may be either the chlorine method or the sulfuric acid method, but as the degree of whiteness is high, titanium oxide produced by the chlorine method is consequently preferred.

The titanium oxide which can be used in the aqueous inkjet ink of the present embodiment is preferably a titanium oxide that has been subjected to a surface treatment with an inorganic compound and/or an organic compound.

Examples of the inorganic compound include compounds of silicon (Si), aluminum, zirconium, tin, antimony and titanium, as well as hydrates of these compounds.

Examples of the organic compound include polyhydric alcohols and alkanolamines and derivatives thereof, higher fatty acids and metal salts thereof, polysiloxane compounds, and organometallic compounds. Among them, polyhydric alcohols and derivatives thereof produce a high degree of hydrophobization of the titanium oxide surface which improves the storage stability of the ink, and are thus, preferably used.

In the aqueous inkjet ink of the present embodiment, in order to adjust the hue and color development properties of the printed matter to within a suitable range, a mixture of a plurality of the above pigments may be used. For example, in order to improve the color tone at low print ratios, a small amount of one or more pigments selected from among cyan organic pigments, magenta organic pigments, orange organic pigments and brown organic pigments may be added to a black ink that uses a carbon black pigment.

### <Pigment Dispersing Resin>

Examples of methods for stably maintaining the dispersion of the pigment in an aqueous ink include (1) a method in which dispersion is achieved by adsorbing a water-soluble pigment dispersing resin to the pigment surface, (2) a method in which dispersion is achieved by adsorbing a water-soluble and/or water-dispersible surfactant to the pigment surface, (3) a method of chemically or physically introducing a hydrophilic functional group to the pigment surface, thereby achieving dispersion in the ink without requiring a dispersant or a surfactant (self-dispersing pigment), and (4) a method of coating the pigment with a water-insoluble resin, and according to need, subsequently using a separate water-soluble pigment dispersing resin or surfactant to disperse the coated pigment in the ink.

In the aqueous ink which can be used in the present embodiment, either of the aforementioned method (1) or (4), namely, a method which uses a pigment dispersing resin is preferably selected. Furthermore, the pigment dispersing resin to be used preferably contains from 20 to 90% by mass of a monomer having an aromatic ring structure relative to the total mass of all the monomers that constitute the pigment dispersing resin. This embodiment is preferable from the viewpoints of improving the adhesion and image quality due to the n-cation interactions formed between the aromatic rings contained in the pigment dispersing resin and the coagulant (A) contained in the pretreatment liquid, and ensuring and improving the storage stability in an aqueous inkjet ink containing a water-soluble organic solvent. In the specification of the present application, the term "pigment dispersing resin" collectively refers to a water-soluble pigment dispersing resin which can be used in the aforementioned methods (1) and (4), and to a water-insoluble resin which can be used in the aforementioned method (4). Further, the term "water-insoluble resin" indicates a resin for which a 1% by mass aqueous solution of the target resin at 25°C does not appear transparent to the naked eye.

In the aqueous ink of the present embodiment, among the methods described above, the selection of the method (1) is particularly preferred. The reason for selecting method (1) is that by investigation and selection of the monomer composition and the molecular weight constituting the resin, the resin adsorption capability relative to the pigment and the electric charge of the pigment dispersing resin can be easily adjusted. As a result, an improvement in the storage stability of the ink, and control of the pigment aggregation function due to the pretreatment liquid of the present embodiment are possible.

The type of pigment dispersing resin is not specifically limited. Examples of the resins that may be used include (meth)acrylic resins, styrene-(meth)acrylic resins, maleic acid (anhydride) resins, styrene-maleic acid (anhydride) resins, olefin-maleic acid (anhydride) resins, polyurethane resins, polyurea resins, polyurethane urea resins, and polyester resins. Among them, in terms of having a greater range of selectable materials containing a monomer having an aromatic ring structure, and in terms of ease of synthesis, the use of a (meth)acrylic resin, a styrene-(meth)acrylic resin, a polyurethane resin, or a polyester resin is particularly preferable. Further, the aforementioned pigment dispersing resin may use a synthetic product synthesized using a conventional method, or a commercially available resin may be used.

The pigment dispersing resin which can be used with the aqueous inkjet ink of the present embodiment preferably contains from 20 to 90% by mass of a monomer having an aromatic ring structure. The amount of the above monomer having the aromatic ring structure relative to the total amount of pigment dispersing resin is more preferably from 20 to 80% by mass, and particularly preferably from 20 to 70% by mass. An amount of the monomer having the aromatic ring structure is adjusted to within the aforementioned range is preferable from the viewpoints of the improvement effect in the adhesion and image quality arising from π-cation interactions, and the effect that ensures and improves the storage stability in an aqueous ink containing a water-soluble organic solvent having a low boiling point.

In one embodiment, in addition to the above aromatic ring structure, the pigment dispersing resin preferably also contains an alkyl group of 8 to 36 carbon atoms. By the alkyl group having 8 to 36 carbon atoms, the pigment dispersion improves, the pigment is easily and uniformly fixed on the pretreatment liquid, and an improvement in the drying property and adhesion can be realized. From the viewpoints of optimizing the compatibility of the water-soluble organic solvent with in the aqueous inkjet ink, and improving the drying property of the printed matter, the number of carbon atoms in the alkyl group is preferably from 10 to 30, and more preferably from 12 to 24. If the number of carbon atoms in the alkyl group is within the range from 10 to 36, the alkyl group may be linear or branched, but a linear alkyl group is preferable. Examples of linear alkyl groups include a lauryl group (C12), a myristyl group (C14), a cetyl group (C16), a stearyl group (C18), an arachyl group (C20), a behenyl group (C22), a lignoceryl group (C24), a cerotyl group (C26), a montanyl group (C28), a melissyl group (C30), a dotriacontanyl group (C32), a tetratriacontanyl group (C34), and a hexatriacontanyl group (C36).

In one embodiment, in addition to the aromatic ring structure, the pigment dispersing resin preferably also contains an alkylene oxide group. By introducing an alkylene oxide group, the hydrophilicity and hydrophobicity of the pigment dispersing resin can be adjusted arbitrarily, and therefore the storage stability of the aqueous ink can be improved. In order to preferably express the aforementioned function, when the water-soluble pigment dispersing resin is used as the pigment dispersing resin, an ethylene oxide group is preferably selected as the alkylene oxide group. In a similar manner, when the water-insoluble resin is used as the pigment dispersing resin, a propylene oxide group is preferably selected as the alkylene oxide group.

When the method (1) described above is selected as a method for maintaining a stable dispersion of the pigment in the aqueous ink, namely, the water-soluble pigment dispersing resin is used as the pigment dispersing resin, the acid within the pigment dispersing resin is preferably neutralized with a base in order to improve the solubility in ink. For example, the base is added so that the pH of a 10% by mass aqueous solution of the pigment dispersing resin is preferably from 7 to 11.5 and more preferably from 7.5 to 11. The addition of such a base makes it easy to dissolve the pigment dispersing resin in the ink without impairing the effect of the coagulant (A) in the pretreatment liquid.

Examples of the base which can be used for neutralizing the pigment dispersing resin include alkanolamines such as diethanolamine, triethanolamine and N-methyldiethanolamine; ammonia water; alkali metal hydroxides such as lithium hydroxide, sodium hydroxide and potassium hydroxide; and alkali metal carbonates such as lithium carbonate, sodium carbonate, sodium hydrogen carbonate and potassium carbonate.

When the method (1) described above is selected as the method for maintaining a stable dispersion of the pigment in the aqueous ink, namely, the water-soluble pigment dispersing resin is used as the pigment dispersing resin, the acid value is preferably from 30 to 375 mgKOH/g. When the acid value was adjusted to within the aforementioned range, the solubility of the pigment dispersing resin in water can be easily ensured. Furthermore, the viscosity of the pigment dispersion liquids can be suppressed by the interaction between the pigment dispersing resin being good. When the acid value is at least 30 mgKOH/g, the solubility in water is good, and the viscosity of the pigment dispersion liquid can be suppressed. When the acid value is not more than 375 mgKOH/g, the storage stability of the aqueous inkjet ink is excellent. The acid value of the pigment dispersing resin is more preferably from 65 to 340 mgKOH/g, and even more preferably from 100 to 300 mgKOH/g.

On the other hand, the method (4) described above may be selected. Namely, when the water-insoluble resin is used as the pigment dispersing resin, the acid value is preferably from 0 to 100 mgKOH/g, more preferably from 5 to 90 mgKOH/g, and even more preferably 10 to 80 mgKOH/g. When the acid value is adjusted to within the aforementioned range, a printed matter having an excellent drying property and abrasion resistance can be easily obtained.

The acid value of the pigment dispersing resin represents the number of mg of potassium hydroxide (KOH) required to neutralize the acid contained in 1 g of the pigment dispersing resin, and is a value obtained by titration of a solution of the pigment dispersing resin in a mixed solvent of ethanol and toluene using a KOH solution. In the present embodiment, the value is measured using an automatic potentiometric titrator AT-610 manufactured by Kyoto Electronics Manufacturing Co., Ltd.

The molecular weight of the pigment dispersing resin is preferably at least 1,000 but not more than 300,000, and more preferably at least 5,000 but not more than 200,000. When the weight average molecular weight is within the aforementioned range, the pigment can be dispersed stably in water, thereby improving the storage stability of the aqueous ink, and, the adjustment of the viscosity is easy when the resin is used in an aqueous ink.

When the weight average molecular weight is at least 1,000, the pigment dispersing resin is resistant to dissolution in the water-soluble organic solvent which is added to the aqueous ink. Accordingly, the adsorption of the dispersion resin to the pigment strengthens, and the storage stability of the ink improves. When the average molecular weight is not more than 300,000, not only can the viscosity be kept low during dispersion, but the discharge stability from the inkjet head becomes good, and stable printing is possible over a long period of time.

The weight average molecular weight of the pigment dispersing resin may be measured using normal methods. Specifically, the weight average molecular weight in the specification of the present application can be determined as a polystyrene-equivalent value measured using a TSK gel column (manufactured by Tosoh Corporation) and a GPC measurement apparatus (HLC-8120GPC, manufactured by Tosoh Corporation) fitted with an RI detector, and using THF as a development solvent.

In the aqueous inkjet ink of the present embodiment, the blending amount of the pigment dispersing resin is preferably from 2 to 60% by mass relative to the pigment. By the blending amount of the pigment dispersing resin relative to the pigment being set from 2 to 60% by mass, the viscosity of the pigment dispersion liquid is suppressed, and the storage stability of the pigment dispersion liquid and the aqueous inkjet ink easily improves. When mixed with the pretreatment liquid of the present embodiment, aggregation occurs rapidly. The blending amount of the pigment dispersing resin relative to the pigment is more preferably from 4 to 55% by mass, and even more preferably from 5 to 50% by mass.

As stated below, the aqueous inkjet ink of the present embodiment preferably contains a binder resin. When a water-soluble pigment dispersing resin is used as the pigment dispersing resin, and, a water-soluble resin is used as the binder resin, the present embodiment may use the method described below which corresponds to the method disclosed in JIS K 5101-1-4 as a method for distinguishing between the water-soluble pigment dispersing resin and the binder resin.

First, 20 parts of a carbon black having a primary particle size of 15 to 25 nm, a nitrogen adsorption specific surface area of 120 to 260 m²/g, and a DBP absorption (granules) of 40 to 80 cm³/100 g, 10 parts of resin and 70 parts of water were mixed thoroughly (premixing). Subsequently, the mixture was subjected to a dispersion treatment for 2 hours using a beads mill (for example, a "Dyno-Mill" manufactured by Shinmaru Enterprises Corporation) having a capacity of 0.6 L filled with 1,800 parts of zirconia beads which are grinding beads having a diameter of 0.5 mm. Following the dispersion treatment, the viscosity of the thus obtained carbon black dispersion at 25°C was measured using an E-type viscometer (for example, an ELD viscometer manufactured by Toki Sangyo Co., Ltd.). Subsequently, the carbon black dispersion was stored for one week in a thermostatic chamber at 70°C, and the viscosity was then remeasured. If the viscosity of the dispersion immediately following dispersion was no more than 100 mPa·s, and, the absolute value of the change in viscosity of the carbon black dispersion after the storage period was no more than 10%, then the resin was deemed to be a water-soluble pigment dispersing resin.

### <Water-Soluble Organic Solvent>

The aqueous inkjet ink of the present embodiment preferably contains a water-soluble organic solvent. Further, the amount of water-soluble organic solvent having a boiling point at one atmosphere of 250°C or higher is preferably no more than 5% by mass relative to the total amount of aqueous inkjet ink. The amount of the water-soluble organic solvent may be 0% by mass. When the amount of the water-soluble organic solvent having a high boiling point is not more than 5% by mass, the drying property, the adhesion and the discharge stability of the aqueous inkjet ink were good. Furthermore, when combined with the pretreatment liquid, a good aqueous ink can be obtained without any image quality defects such as bleeding. From the viewpoint of further improving the image quality, the drying property and the adhesion, the amount of the water-soluble organic solvent having a boiling point at one atmosphere of 250°C or higher is preferably no more than 2% by mass and more preferably no more than 1% by mass. The amount of the water-soluble organic solvent may be 0% by mass.

For the same reasons, the amount of water-soluble organic solvent having a boiling point at one atmosphere of 220°C or higher, relative to the total amount of aqueous ink, is preferably not more than 5% by mass, and particularly preferably not more than 2% by mass. The amount of the water-soluble organic solvent may be 0% by mass. The amount of the water-soluble organic solvent having a boiling point at one atmosphere of 220°C or higher is a value calculated so as to include the water-soluble organic solvents having a boiling point at one atmosphere of 250°C or higher.

In one embodiment, the weighted boiling point average at one atmosphere of the water-soluble organic solvents contained in the aqueous inkjet ink is preferably from 145 to 215°C, more preferably from 150 to 200°C, and particularly preferably from 155 to 190°C. If the weighted boiling point average of the water-soluble organic solvent is adjusted to a value within the aforementioned range, when used in combination with the pretreatment liquid of the present embodiment, a printed items having an excellent image quality can be obtained even during high-speed printing, and an excellent discharge stability can also be obtained. Note that, the calculation of the weighted boiling point average includes the aforementioned water-soluble organic solvents having a boiling point at one atmosphere of 250°C or higher and the water-soluble organic solvents having a boiling point of 220°C or higher. Further, the weighted boiling point average at one atmosphere is a value obtained by calculating, for each water-soluble organic solvent, the product of the boiling point at one atmosphere and the mass ratio solvent relative to all of the water-soluble organic solvents, and then adding together the calculated products for each of the water-soluble organic solvents.

The total mass of the water-soluble organic solvent used in the aqueous inkjet ink of the present embodiment relative to the total amount of aqueous inkjet ink is preferably from 3 to 40% by mass. Furthermore, from the viewpoints of achieving excellent discharge stability from the nozzles, ensuring a satisfactory wettability and drying property when combined with the pretreatment liquid, and obtaining an excellent adhesion and image quality, the total mass of the water-soluble organic solvent is more preferably from 5 to 35% by mass, and particularly preferably from 8 to 30% by mass. When the total mass of the water-soluble organic solvent is at least 3% by mass, the moisture retention of the ink is good, and an ink having an excellent discharge stability is obtained. Further, when the content of the water-soluble organic solvent is not more than 40% by mass, an ink having a good drying property can be obtained, and a printed matter having an excellent image quality can be easily obtained. From the viewpoint of the compatibility and the affinity between the material components contained in the aqueous inkjet ink such as the pigment dispersing resin, and the binder resin and surfactant described below and the pretreatment liquid, the aqueous ink preferably comprises a glycol ether-based solvent and/or alkyl polyol-based solvent.

Specific examples of glycol ether-based solvents having a boiling point at one atmosphere of less than 250°C which are preferably used include glycol monoalkyl ethers such as ethylene glycol monoethyl ether, ethylene glycol monopropyl ether, ethylene glycol monobutyl ether, diethylene glycol monomethyl ether, diethylene glycol monoethyl ether, diethylene glycol monopropyl ether, diethylene glycol monobutyl ether, triethylene glycol monomethyl ether, propylene glycol monomethyl ether, propylene glycol monoethyl ether, propylene glycol monopropyl ether, dipropylene glycol monomethyl ether, dipropylene glycol monoethyl ether, dipropylene glycol monopropyl ether, dipropylene glycol monobutyl ether, tripropylene glycol monomethyl ether, 1,2-butylene glycol monomethyl ether, 3-methoxybutanol, and 3-methyl-3-methoxybutanol; and
glycol dialkyl ethers such as diethylene glycol diethyl ether, diethylene glycol isopropyl methyl ether, diethylene glycol butyl methyl ether, triethylene glycol dimethyl ether and triethylene glycol methyl ethyl ether.

In particular, in terms of achieving a combination of excellent moisture retention and drying properties, among the glycol ether-based solvents listed above, ethylene glycol monobutyl ether, diethylene glycol monoethyl ether, diethylene glycol monopropyl ether, diethylene glycol monobutyl ether, propylene glycol monomethyl ether, propylene glycol monoethyl ether, propylene glycol monopropyl ether, dipropylene glycol monomethyl ether, dipropylene glycol monoethyl ether, dipropylene glycol monopropyl ether, dipropylene glycol monobutyl ether, 1,2-butylene glycol monomethyl ether, 3-methoxybutanol, diethylene glycol butyl methyl ether and triethylene glycol methylethyl ether are preferably selected.

Further, examples of alkyl polyol-based solvents having a boiling point at one atmosphere of less than 250°C include 1,2-ethanediol, 1,2-propanediol, 1,3-propanediol, 1,2-butanediol, 1,3-butanediol, 1,4-butanediol, 1,2-pentanediol, 1,5-pentanediol, 1,2-hexanediol, 2,2-dimethyl-1,3-propanediol, 2-methyl-1,3-propanediol, 2-ethyl-2-methyl-1,3-propanediol, 3-methyl-1,3-butanediol, 2-methylpentan-2,4-diol, 2-ethyl-1,3-hexanediol, diethylene glycol and dipropylene glycol.

**In** terms of achieving a combination of excellent moisture retention and drying properties, among the alkyl polyol-based solvents listed above, 1,2-ethanediol, 1,2-propanediol, 1,2-butanediol, 1,2-pentanediol, 1,2-hexanediol are preferably selected. 1,2-ethanediol, 1,2-propanediol, 1,2-butanediol are more preferable.

### <Binder Resin>

The aqueous inkjet ink of the present embodiment preferably contains a binder resin. The form of the binder resin may be either a water-soluble resin or a resin particle, and a combination of two or more types of binder resin may also be used depending on the characteristics required of the aqueous inkjet ink and the printed matter. For example, the resin particle can lower the viscosity of the aqueous inkjet ink, and a larger amount of the resin can be added, and thus, a binder resin is suitable for enhancing the durability of the printed matter. Further, aqueous inkjet inks that use a water-soluble resin as the binder resin has an excellent discharge stability, and an excellent image quality of the printed matter when combined with the pretreatment liquid of the present embodiment.

Further, the types of resins that that can be preferably used as the binder resin are the same as those described above for the resin (C) contained in the pretreatment liquid. Among them, from the viewpoints of improving the storage stability of the aqueous inkjet ink, and the adhesion and abrasion resistance of the printed matter when used in combination with the pretreatment liquid of the present embodiment, (meth)acrylic resins, styrene-(meth)acrylic resins, polyurethane resins, polyurea resins, polyurethane urea resins, and polyolefin resins are preferably used.

When a water-soluble resin is used as the binder resin, from the viewpoint achieving discharge stability of the aqueous inkjet ink and adhesion and abrasion resistance of the printed matter, the weight average molecular weight of the water-soluble resin is preferably within a range from 5,000 to 80,000, more preferably within a range from 8,000 to 60,000, and particularly preferably within a range from 10,000 to 50,000. Further, for similar reasons, the acid value of the water-soluble resin is preferably from 5 to 80 mgKOH/g, and more preferably from 10 to 50 mgKOH/g. Note that, the weight average molecular weight is the value calculated by the aforementioned method.

The amount of the binder resin binder resin within the total mass of the aqueous inkjet ink, in terms of solid content, is preferably from 1 to 20% by mass, more preferably from 2 to 15% by mass, and particularly preferably from 3 to 10% by mass of the total mass of the aqueous inkjet ink.

### <Surfactant>

A surfactant is preferably used in the aqueous ink of the present embodiment for the purpose of adjusting the surface tension and improving the image quality. On the other hand, if the surface tension is too low, the nozzle surface of the inkjet head tends to become wet by the aqueous ink which leads to the discharge stability decreasing, and accordingly, the selection of the type and the amount of surfactant are extremely important. From the viewpoints of ensuring the wettability of the ink relative to the substrate the substrate coated with a pretreatment agent, and optimizing the discharge stability from the nozzles, a siloxane-based surfactant, acetylene diol-based surfactant or fluorine-based surfactant is preferably used. Among them, use of a siloxane-based surfactant is particularly preferred. According to the invention an acetylene diol-based surfactant is used. The added amount of the surfactant is preferably from 0.01 to 5.0% by mass relative to the total amount of aqueous ink, and from 0.1 to 3.5% by mass is further preferable.

The surfactant used in the aqueous ink of the present embodiment can be synthesized by any known methods, commercially available products can be used. When using a commercially available surfactant, examples of siloxane-based surfactant include BY16-201, FZ-77, FZ-2104, FZ-2110, FZ-2162, F-2123, L-7001, L-7002, SF8427, SF8428, SH3749, SH8400, 8032 ADDITIVE and SH3773M (manufactured by Dow Coming Toray Co., Ltd.), Tegoglide 410, Tegoglide 432, Tegoglide 435, Tegoglide 440, Tegoglide 450, Tegotwin 4000, Tegotwin 4100, Tegowet 250, Tegowet 260, Tegowet 270 and Tegowet 280 (manufactured by Evonik Degussa Corporation), SAG-002 and SAG-503A (manufactured by Nissin Chemical Industry Co., Ltd), BYK-331, BYK-333, BYK-345, BYK-346, BYK-347, BYK-348, BYK-349, BYK-UV3500 and BYK-UV3510 (manufactured by BYK Chemie GMBH), KF-351A, KF-352A, KF-353, KF-354L, KF-355A, KF-6004, KF-6011, KF-6012, KF-6013, KF-6015, KF-6016, KF-6017, KF-6043, KF-615A, KF-640, KF-642 and KF-643 (manufactured by Shin-Etsu Chemical Co., Ltd.) and the like.

Further, examples of fluorine-based surfactants include Zonyl TBS, FSP, FSA, FSN-100, FSN, FSO-100, FSO, FS-300, Capstone FS-30 and FS-31(manufactured by DuPont), PF-151N and PF-154N (manufactured by Omnova Solutions Inc.) and the like. However, the fluorine-based surfactant is not limited thereto.

Examples of the acetylene diol-based surfactant include 2,4,7,9-tetramethyl-5-decyne-4,7-diol, 2,5,8,11-tetramethyl-6-dodecyne-5,8-diol, hexadeca-8-yne-7,10-diol, 6,9-dimethyltetradeca-7-yne-6,9-diol, 7,10-dimethylhexadeca-8-yne-7,10-diol, and ethylene oxide adducts, and/or, a propylene oxide adduct.

Examples of the commercially available products of the acetylene diol-based surfactant are not specifically limited and include Surfynol 61, 104E, 104H, 104A, 104BC, 104DPM, 104PA, 104PG-50, 420, 440, 465, 485, SE, SE-F, Dynol604 and 607(manufactured by Air Products and Chemicals, Inc.), Olfine E1004, E1010, E1020, PD-001, PD-002W, PD-004, PD-005, EXP.4001, EXP.4200, EXP.4123 and EXP.4300 (manufactured by Nissin Chemical Industry Co., Ltd).

The surfactant may be used alone, or two or more may be used together.

The surfactant used in the aqueous ink and the surfactant used in the pretreatment liquid may be the same or different. When using various different surfactants, the blending amounts are preferably determined in consideration of the surface tension of both surfactants.

### <Water>

The water included in the aqueous ink of the present embodiment is preferably not a typical water containing various ions, and the use of an ion-exchanged water (deionized water) is preferred.

The amount of water which can be used in the aqueous ink of the present embodiment is preferably within a range from 20 to 90% by mass relative to the total mass of the ink.

### <Other Components>

In addition to the aforementioned components, if necessary a pH adjusting agent may be added to the aqueous ink of the present embodiment in order to achieve an ink having certain desired physical property values, and any material having a pH adjustment function may be selected. When the aqueous ink needs to be made more basic, examples of materials that may be used as the pH adjuster include: alkanolamines such as dimethylethanolamine, diethanolamine, triethanolamine and N-methyldiethanolamine; ammonia water; alkali metal hydroxides such as lithium hydroxide, sodium hydroxide and potassium hydroxide; and alkali metal carbonates such as lithium carbonate, sodium carbonate, sodium hydrogen carbonate and potassium carbonate. When the aqueous ink needs to be made more acidic, examples of materials that may be used as the pH adjuster include hydrochloric acid, sulfuric acid, acetic acid, citric acid, maleic acid, maleic anhydride, succinic acid, tartaric acid, malic acid, phosphoric acid, boric acid, fumaric acid, malonic acid, ascorbic acid and glutamic acid. One of the above pH adjusters may be used alone, or a combination of two or more pH adjusters may be used.

The blending amount of the pH adjusting agent is preferably from 0.01 to 5% by mass, more preferably from 0.1 to 3% by mass, and most preferably from 0.2 to 1.5% by mass relative to the total amount of aqueous inkjet ink. By adjusting the blending amount of the pH adjusting agent to within the above range, the effects of the present invention can be preferably exhibited without pH changes caused by the dissolution of carbon dioxide in the air or the like, and, without the aggregation effect caused by the coagulant (A) being impaired when the pretreatment liquid contacts with the aqueous inkjet ink.

In addition to the other components, if necessary, preservatives, anti-foaming agent, preservatives, infrared absorbers and ultraviolet absorbers may be appropriately added to the aqueous inkjet ink of the present embodiment in order to achieve an ink having certain desired physical property values. The added amount of these additives is preferably 0.01 to 5% by mass relative to the total mass of the ink.

In a similar manner to the pretreatment liquid, the aqueous inkjet ink of the present embodiment preferably contains substantially no polymerizable monomers.

### <Aqueous Inkjet Ink Set>

The aqueous inkjet ink of the present embodiment may even use a single color, but depending on the application, an aqueous inkjet ink set containing a combination of a plurality of colors may also be used. The combination is not specifically limited, but by using the three colors of cyan, yellow and magenta, full-color images can be obtained. Further, by also adding a black ink, the level of blackness can be improved, and the legibility of the characters and the like can be improved. Furthermore, by also adding other colors such as orange and green, it is possible to improve the color reproducibility.

In the case of a transparent film substrate, which represents one example of a low absorption substrate, printing of a white ink can obtain sharper images. In particular, printing with a white ink can improve the clarity and legibility of the characters which have been printed in black ink. Therefore, when using a transparent film substrate, at least a white ink and a black ink are preferably combined.

### <Method for Producing Aqueous Inkjet Ink>

The aqueous inkjet ink of the present embodiment comprising the aforementioned components is produced, for example by the processes described below. However, the production process of the aqueous inkjet ink of the present embodiment is not limited to the processes described below.

### (1) Production of Pigment Dispersion

When a water-soluble pigment dispersing resin is used as the pigment dispersing resin, the water-soluble pigment dispersing resin, water, and if necessary a water-soluble organic solvent are mixed and stirred to prepare a water-soluble pigment dispersing resin mixture. The pigment is added to the water-soluble pigment dispersing resin mixture, and following mixing and stirring (premixing), a dispersion treatment is performed using a dispersion device. Subsequently, centrifugal separation, filtration and adjustment of the solid fraction concentration may be performed if necessary to obtain a pigment dispersion.

When producing a dispersion of a pigment coated with a water-insoluble resin, the water-insoluble resin is first dissolved in an organic solvent such as methyl ethyl ketone, and the water-insoluble resin is then neutralized if necessary to produce a water-insoluble resin solution. The pigment and water are added to the water-insoluble resin solution, and following mixing and stirring (premixing), a dispersion treatment is performed using a dispersion device. Subsequently, the organic solvent is removed by distillation under reduced pressure, and centrifugal separation, filtration and adjustment of the solid fraction concentration may then be performed if necessary to obtain a pigment dispersion liquid.

The dispersion device used for the pigment dispersion treatment may be any generally used dispersion device. Examples include a ball mill, roll mill, sand mill, beads mill and nanomizer. Among them, a beads mill is preferably used. Specific examples include devices available commercially with product names such as Supermill, Sand Grinder, Agitator Mill, Glen Mill, Dyno-Mill, Pearl Mill and CoBall Mill.

Examples of methods for controlling the particle size distribution of the pigment dispersion liquids include reducing the size of the grinding media in the aforementioned dispersion device, altering the material of the grinding media, increasing the grinding media filling ratio, altering the shape of the stirring member (agitator), lengthening the dispersion treatment time after the dispersion treatment, or a combination of these methods. In order for the pigment to be within the preferred particle size range, the diameter of the grinding media in the above dispersion device is preferably from 0.1 to 3 mm. Further, examples of materials that can be preferably used as the grinding media include glass, zircon, zirconia and titania.

### (2) Preparation of Aqueous Inkjet Ink

Next, the water-soluble organic solvent, water, and if necessary, the binder resin, surfactant and other additives described above are added to, stirred and mixed with the pigment dispersion liquids. Note that, the mixture may be stirred and mixed while being heated at a temperature within a range from 35 to 100°C if necessary.

### (3) Removal of Coarse Particles

Coarse particles contained in the mixture, can be removed using a technique such as filtration separation or centrifugal separation, thus obtaining the aqueous inkjet ink. Conventional methods may be used as appropriate for the filtration separation method. Further, the filter pore size is not specifically limited as long as the coarse particles and dust can be removed. However, the pore size is preferably from 0.3 to 5 µm, and more preferably from 0.5 to 3 µm. Further, when filtration is performed, a single type of filter may be used, or a combination of a plurality of filters may be used.

### <Properties of Aqueous Inkjet Ink>

The viscosity of the aqueous inkjet ink of the present embodiment at 25°C is preferably adjusted to 3 to 20 mPas. If the viscosity in in the aforementioned range, the aqueous ink exhibits stable discharge characteristics from the inkjet heads having a typical frequency of 4 to 10 kHz through to the inkjet heads having a high frequency of 10 to 70 kHz. In particular, by setting the viscosity at 25°C from 4 to 10 mPas, a stable discharge is possible even if used with an inkjet head having a design resolution of 600 dpi or higher.

Note that, the viscosity can be measured using normal methods. In the present embodiment, the viscosity is the value measured with an E-type viscometer (TVE25L viscometer, manufactured by Toki Sangyo Co., Ltd.), using 1 mL of the ink.

The aqueous inkjet ink of the present embodiment preferably has a static surface tension at 25°C from 18 to 35 mN/m, more preferably from 19 to 32 mN/m, and particularly preferably from 20 to 30 mN/m. When such an aqueous inkjet ink is used, a printed matter having an excellent discharge stability, and an excellent adhesion and image quality can be easily obtained in combination with the pretreatment liquid of the present embodiment. Further, from the viewpoint of preventing mixed color bleeding and color unevenness in the printed matter, and obtaining a printed matter having a dramatically excellent image quality, it is preferable that the types and amounts of the water-soluble organic solvent and the surfactant are adjusted so that the surface tension of the aqueous ink of the present embodiment is no higher than the surface tension of the pretreatment liquid. The static surface tension in the present embodiment is the value measured in the same manner as that of the pretreatment liquid.

For the same reasons as those mentioned above, the dynamic surface tension at 25°C and 10 msec of the aqueous inkjet ink of the present embodiment is preferably from 25 to 40 mN/m, more preferably from 28 to 38 mN/m, and particularly preferably from 30 to 36 mN/m. Note that, the dynamic surface tension in the present embodiment is the value measured using a bubble pressure dynamic surface tension meter BP100 manufactured by Kruss GmbH, using the maximum bubble pressure method performed at 25°C.

The aqueous inkjet ink of the present embodiment preferably has an average secondary particle size (D50) of the pigment from 40 nm to 500 nm, more preferably from 50 nm to 400 nm, and particularly preferable from 60 nm to 300 nm in order to obtain a printed matter having excellent color development. In order to adjust the average secondary particle size to within the above preferred range, the pigment dispersion treatment process is preferably controlled in the manner as described above.

The average secondary particle size of the pigment is a value measured by the same methods as that described above for particle size of the resin (C). When the aqueous inkjet ink contains resin particles as the binder resin, it is preferable to prepare an ink in which an amount corresponding to the blending amount of the resin particles is substituted with water to measure the particle size.

One embodiment of the present invention relates to a printed matter in which an aqueous inkjet ink comprising a pigment and water was printed on a substrate on which the pretreatment liquid of an embodiment was applied. The printed matter may be formed using the aqueous inkjet ink set of the embodiment.

### <Method for Producing Printed Matter>

The method for producing a printed matter using an embodiment of the ink set containing a combination of the pretreatment liquid of the present embodiment and the aqueous inkjet ink is not specifically limited. In one embodiment, the method comprising a step of applying the pretreatment liquid described above to a low absorption substrate, a step of applying the aqueous inkjet ink described above by one-pass inkjet printing to the portion of the low absorption substrate to which the pretreatment liquid has been applied, and a step of drying the low absorption substrate to which the aqueous inkjet ink has been applied can be preferably used. The steps are preferably performed in the order described above.

In the specification of the present application, "one-pass inkjet printing" describes a method for printing in which either the inkjet head is scanned only once across a stationary substrate, or, the substrate is passed only once beneath a stationary inkjet head, and in which no ink is overprinted on top of the previously printed ink. However, when the inkjet head is scanned, the discharge timing must be adjusted in accordance with the movement of the inkjet head, and there is an increased likelihood of variation in the impact position. Therefore, when printing the aqueous ink of the present embodiment, the method in which the substrate is passed beneath a stationary inkjet head can be preferably used.

A method for producing a printed matter using the ink set of the present embodiment is described below.

### <Pretreatment Liquid Application Method>

When producing a printed matter using the ink set of the present embodiment, it is preferable that the pretreatment liquid is applied to the low absorption substrate prior to printing of the aqueous inkjet ink. The method used for applying the pretreatment liquid may be either a non-contact method for printing to the substrate such as inkjet printing, or a printing method in which the pretreatment liquid is brought into contact with the substrate. Further, when a printing method in which the pretreatment liquid is brought into contact with the substrate is selected as the application method of the pretreatment liquid, an offset gravure coater, a gravure coater, a doctor coater, a bar coater, a blade coater, a flexo coater, or a roller configuration such as a roll coater may be preferably used.

### <Drying Method Following Application of Pretreatment Liquid>

In the ink set of the present embodiment, the low absorption substrate may be dried following application of the pretreatment liquid to the low absorption substrate, so that the pretreatment liquid is dried on the substrate before the aqueous inkjet ink is applied, and the aqueous inkjet ink may be applied before the pretreatment liquid has dried completely on the substrate. In one embodiment, it is preferable that the pretreatment liquid is dried completely before the aqueous inkjet ink is applied, namely, that a state is obtained in which the liquid components of the pretreatment liquid have been completely removed. By applying the aqueous inkjet ink after the pretreatment liquid has been completely dried, a printed matter having excellent abrasion resistance can be obtained, without the problem of unsatisfactory drying of the subsequently adhered aqueous inkjet ink occurring.

The drying method used in the printing of the pretreatment liquid of the present embodiment is not specifically limited. Conventionally known methods such as heated drying methods, hot air drying methods, infrared drying methods, microwave drying methods and drum drying methods may be used. The aforementioned drying methods can be used alone, or a combination of a plurality of methods may be used. From the viewpoint of reducing damage to the low absorption substrate, and ensuring efficient drying, a hot air drying method is preferably used. Further, from the viewpoint of preventing damage to the substrate and preventing sudden boiling of the liquid components in the pretreatment liquid, in the case where a heated drying method is used, the drying temperature is preferably from 35 to 100°C. Further, in those cases where a hot air drying method is employed, the hot air temperature is preferably from 50 to 150°C.

### <Aqueous Inkjet Ink Application Method>

The aqueous inkjet ink preferably uses a method in which the ink is applied by one-pass inkjet printing to the portion of the low absorption substrate to which the pretreatment liquid has been applied. In terms of obtaining images having an excellent image quality, the design resolution of the inkjet head used in the one-pass inkjet printing is preferably at least 600 dpi (dots per inch), and is more preferably 720 dpi or higher.

### <Drying Method Following Printing of Aqueous Inkjet Ink>

Following printing of the aqueous inkjet ink, in order to dry the aqueous ink and any undried pretreatment liquid, a step of drying the low absorption substrate to which the aqueous inkjet ink has been applied is preferably included. Drying methods which can be preferably used are the same methods as those in the case of the pretreatment liquid.

### <Coating Amounts of Pretreatment Liquid and Aqueous Inkjet Ink>

When printing with the ink set of the present embodiment, the ratio of the coating amount of the aqueous inkjet ink relative to the coating amount of the pretreatment liquid is preferably at least 0.1 and not more than 10. The coating amount ratio is more preferably at least 0.5 and not more than 9, is particularly preferably at least 1 but not more than 8. When the ratio of the coating amount was adjusted to the aforementioned range, a printed matter having an excellent image quality can be easily obtained without changes to the texture of the substrate.

### <Low Absorption Substrate>

The low absorption substrate which uses the ink set of the present embodiment may be a conventionally known substrate. Examples of the substrate include paper substrates such as coated paper, art paper, lightly coated paper, thermoplastic resin substrates such as polyvinyl chloride sheets, polyethylene terephthalate (PET)films, polypropylene films, polyethylene films, nylon films, polystyrene films, and polyvinyl alcohol films, and metal substrates such as aluminum foil. The substrate may even have a smooth surface, or may have irregularities on the surface. The substrate may be transparent, semi-transparent or opaque. Further, two or more of these substrates may also be bonding together. Furthermore, a releasable adhesive layer may be provided on the substrate on the opposite side from the printing surface, or an adhesive layer may be provided on the printed surface following printing. The form of the substrate used in the printing using the ink set of the present embodiment may be in a roll form or in a sheet-like form.

Among them, in order to satisfactorily express the functions of the pretreatment liquid of the present embodiment, the low absorption substrate is preferably a thermoplastic resin substrate. Among them, PET films, polypropylene films, polyethylene films, and nylon films are particularly preferable.

From the viewpoint of uniformly applying the pretreatment liquid of the present embodiment without unevenness, and dramatically improving the adhesion, when a film substrate was used as the low absorption substrate, the substrate described above is preferably subjected to a surface modification treatment such as corona treatment or plasma treatment.

### <Coating Treatment>

With the printed matter produced using the ink set of the present embodiment, if necessary the printing surface may be subjected to a coating treatment. Specific examples of the coating treatment include methods such as applying/printing of a coating composition, and lamination such as by a dry laminating method, a solvent-free laminating method, and an extrusion laminating method. Any of the methods may be selected, or a combination of a plurality of treatments may be used.

When the printed item is subjected to a coating treatment by applying or printing a coating composition, either of a non-contact method for printing to the substrate such as inkjet printing or a printing method in which the coating composition is brought into contact with the substrate may be utilized as the application or printing method. When the coating composition is printed to the substrate by a non-contact method, an ink in which the pigment has been removed from the aqueous inkjet ink of the present embodiment, namely an ink containing substantially no colorant components (a clear ink) is preferably used as the coating composition.

When subjecting a printed matter to lamination, the adhesive used for laminating the sealant substrate is preferably composed of a mixture of a polyol component and a polyisocyanate component.

The polyol component may be a resin component having hydroxyl groups, and contributes to the coatability, the wettability of and the permeability into the printed item interface, and the lamination strength generated after aging. In the ink set of the present embodiment, the polyol component preferably comprises a polyester polyol. The embodiment has a good wettability relative to the interface of the printed matter which is obtained, for example, the printed layer (printed portion) and the pretreatment liquid layer (non-printed portion), and furthermore, is preferable in that the lamination strength of the laminated printed matter (laminate) is excellent. The polyol component may be used alone, or a combination of a plurality of components may be used.

The polyisocyanate component reacts with the polyol component to form a urethane bond, thereby increasing the molecular weight of the adhesive layer, and increasing the lamination strength. Among them, in one embodiment, the polyisocyanate component preferably comprises an isocyanate group-terminated polyether-based urethane resin. The embodiment is preferable from the viewpoints of the compatibility with the polyol component, the wettability at the interface with the printed matter, and, the lamination strength of the printed matter (laminate) obtained using the ink set of the present embodiment. Further, from the same viewpoint, the blending amount of the polyisocyanate component is preferably from 50 to 80% by mass relative to the polyol component. The polyisocyanate component may be used alone as a single component, or a combination of a plurality of components may be used.

Examples of the sealant substrate used in the above lamination processing include polypropylene films and polyethylene films such as unstretched polypropylene (CPP) films and linear short-chain branched polyethylene (LLDPE) films. As other examples of the sealant substrate, films having a vapor deposition layer of a metal (oxide) such as aluminum oxide may be also used.

### [Examples]

The pretreatment liquid, and a recording liquid set containing the pretreatment liquid and the aqueous inkjet ink of the embodiments which represent embodiments of the present invention are described below in further detail using examples and comparative examples. Note that, in the following description, unless specifically stated otherwise, "parts" and "%" represent "parts by mass" and "% by mass" respectively.

### <Preparation of Pretreatment Liquid>

### <PVA103 Varnish Production Example>

After the materials listed below mixed for one hour at room temperature while stirring, the mixture was heated to 90°C and mixed for an one hour. Subsequently, the mixture was then cooled to room temperature to obtain a PVA103 varnish.

| | |
|---|---|
| PVA103 (polyvinyl alcohol manufactured by KURARAY Co., Ltd (degree of saponification: 98 to 99% (fully saponified), degree of polymerization: 300)) | 25 parts |
| Ion-exchanged water | 75 parts |

### <Pretreatment Liquid 1 Production Example>

A mixing container fitted with a stirrer was prepared and the materials described below were added sequentially. After mixing for one hour at room temperature while gently stirring, the mixture was heated to 60°C and mixed for a further one hour. Subsequently, the mixture was cooled to room temperature and filtered through a membrane filter having a pore size of 1 µm to obtain a pretreatment solution 1.

| | |
|---|---|
| Calcium acetate | 10 parts |
| Surfactant 1 | 1 part |
| PVA103 varnish | 20 parts |
| 2-propanol (iPrOH) | 4 parts |
| PROXEL GXL (preservative, 1,2-benzisothiazol-3-one solution, manufactured by Arch Chemicals, Inc.) | 0.1 part |
| Ion-exchanged water | 64.9 parts |

### <Pretreatment Liquids 2 to 106 Production Example>

With the exception of using the materials illustrated in Table 1, the same methods as that described for the pretreatment liquid 1 was used to produce the pretreatment liquids 2 to 106. Note that, the details of the materials used are described in the following Tables 2 to 4.

### [Table 1-1]

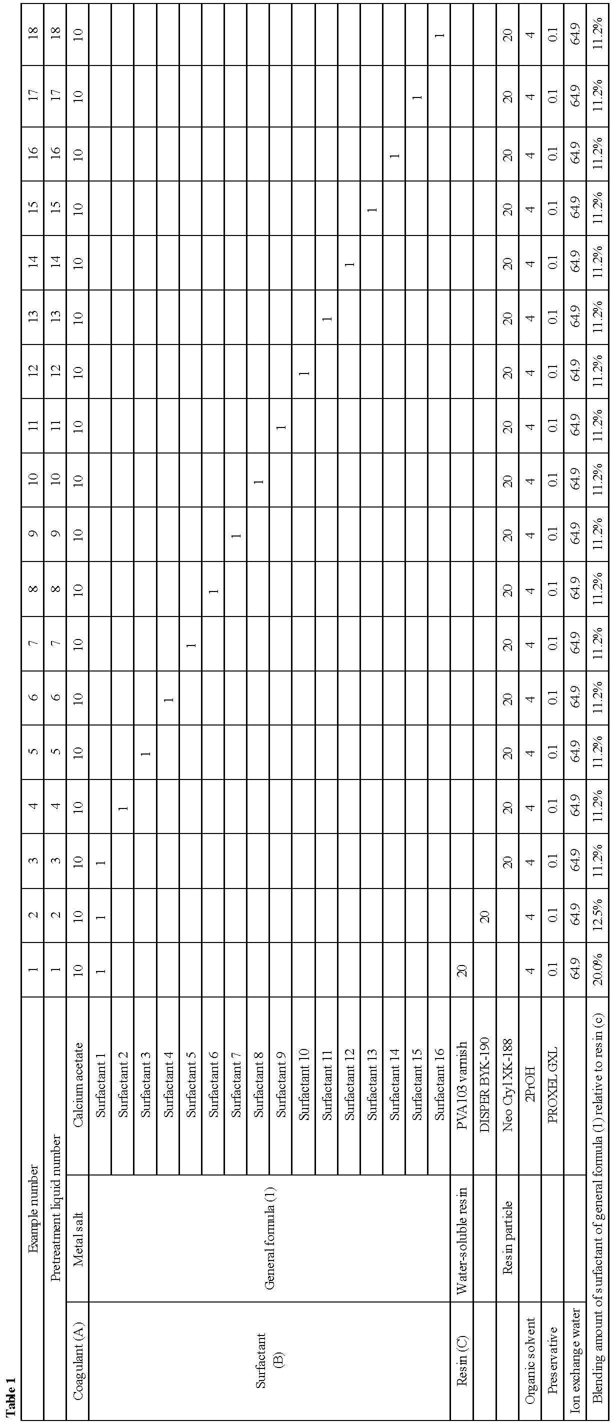

### [Table 1-2]

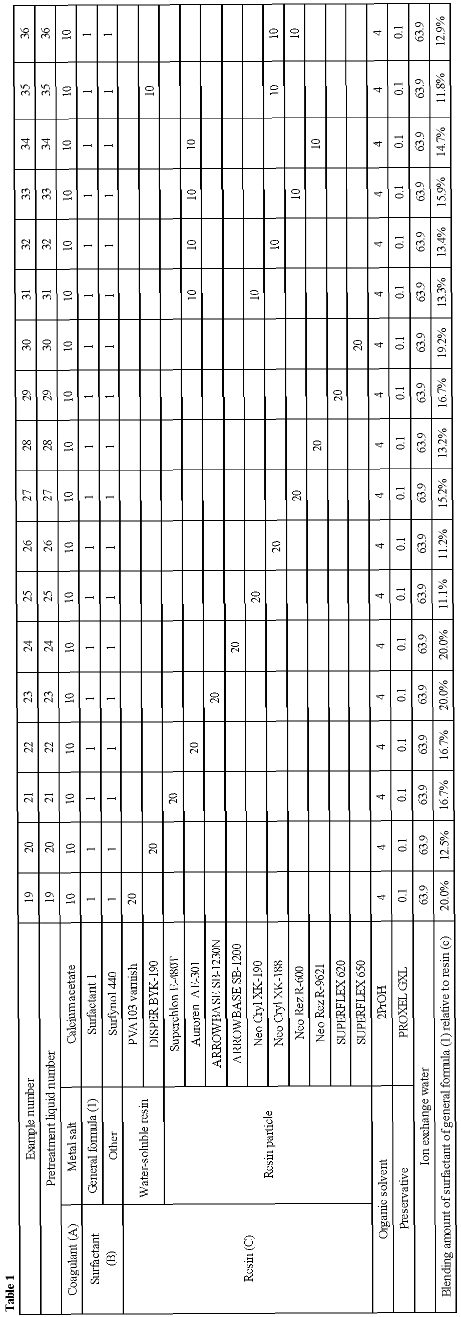

### [Table 1-3]

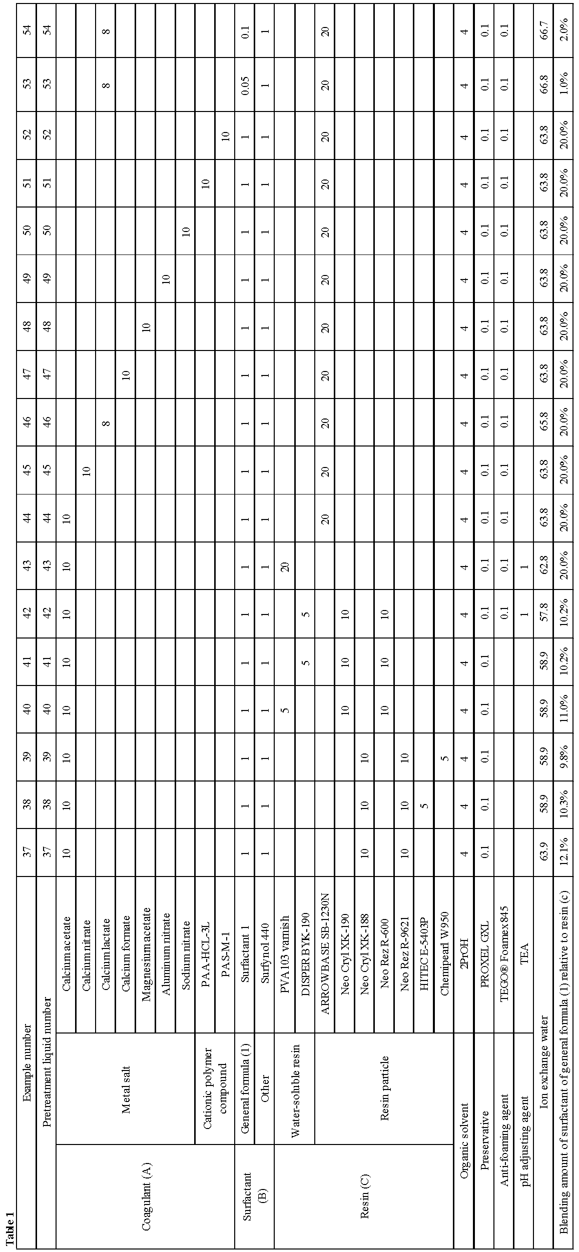

### [Table 1-4]

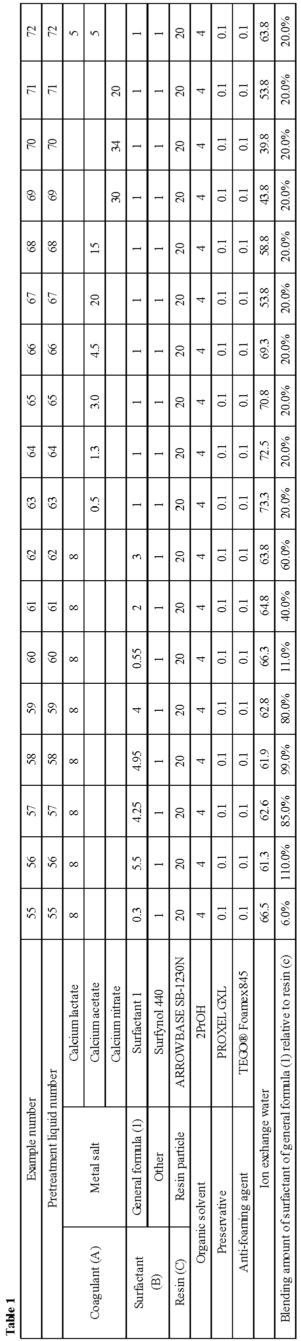

### [Table 1-5]

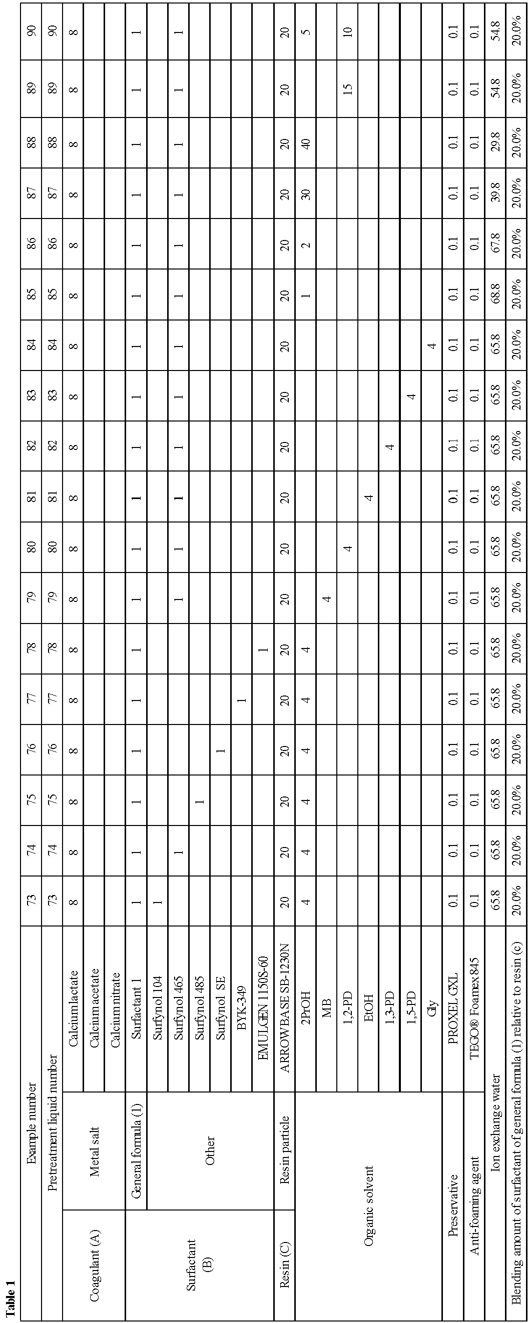

**[Table 1-6]**

| **Table 1** | | | | | | | | | | | | |
|---|---|---|---|---|---|---|---|---|---|---|---|---|
| Example number | | | 91 | 92 | 93 | 94 | 95 | 96 | 97 | 98 | 99 | 100 |
| Pretreatment liquid number | | | 91 | 92 | 93 | 94 | 95 | 96 | 97 | 98 | 99 | 100 |
| Coagulant (A) | Metal salt | Calcium lactate | 5 | 5 | 5 | 5 | 5 | 5 | 5 | 5 | 5 | 5 |
| | | Calcium acetate | | | | | | | | | | |
| | | Calcium nitrate | | | | | | | | | | |
| Surfactant (B) | General formula (1) | Surfactant 1 | | | | | 0.5 | 0.5 | | | | |
| | | Surfactant 2 | 1 | 1 | 1 | 1 | 0.5 | | | | | |
| | | Surfactant 3 | | | | | | 0.5 | | | | |
| | | Surfactant 4 | | | | | | | 1 | 1 | 1 | 1 |
| | Other | Surfynol 465 | 1 | 1 | 1 | 1 | 1 | 1 | 1 | 1 | 1 | 1 |
| Resin (C) | Resin particle | Neo Cryl XK-188 | 2 | 60 | 45 | 20 | 10 | 10 | 10 | 10 | 10 | 10 |
| | | ARROWBASE SB-1230N | | | | | 10 | 10 | 10 | | 10 | 10 |
| | | Neo Rez R-9621 | | | | | | | | 10 | | |
| Organic solvent | | 2PrOH | | | | | | | 5 | 5 | 5 | 5 |
| | | MB | | | | | | | | | | |
| | | 1,2-PD | 5 | 5 | 5 | 5 | 5 | 5 | 1 | 1 | | |
| | | EtOH | | | | | | | | | | |
| | | 1,3-PD | | | | | | | | | | |
| | | 1,5-PD | | | | | | | | | 1 | |
| | | Gly | | | | | | | | | | 1 |
| Pres ervative | | PROXEL GXL | 0.1 | 0.1 | 0.1 | 0.1 | 0.1 | 0.1 | 0.1 | 0.1 | 0.1 | 0.1 |
| Anti-foaming agent | | TEGO^{®} Foamex 845 | 0.1 | 0.1 | 0.1 | 0.1 | 0.1 | 0.1 | 0.1 | 0.1 | 0.1 | 0.1 |
| Ion exchange water | | | 85.8 | 27.8 | 42.8 | 67.8 | 67.8 | 67.8 | 66.8 | 66.8 | 66.8 | 66.8 |
| Blending amount of surfactant of general formula (1) relative to resin (c) | | | 112.4% | 3.7% | 5.0% | 11.2% | 14.4% | 14.4% | 14.4% | 12.1% | 14.4% | 14.4% |

**[Table 1-7]**

| **Table 1** | | | | | | | | |
|---|---|---|---|---|---|---|---|---|
| Comparative example number | | | 1 | 2 | 3 | 4 | 5 | 6 |
| Pretreatment liquid number | | | 101 | 102 | 103 | 104 | 105 | 106 |
| Coagulant (A) | Metal salt | Calcium lactate | | | 5 | 5 | 5 | 5 |
| Other coagulants | | Malonic acid | 5 | | | | | |
| Surfactant (B) | General formula (1) | Surfactant 1 | | | | | | 1 |
| | | Surfactant 2 | 1 | 1 | | | | |
| | Other | Surfynol 465 | 1 | 1 | 1 | | | 1 |
| | | BYK-349 | | | | 1 | | |
| | | EMULGEN 1150S-60 | | | | | 1 | |
| Resin (C) | Resin particle | Neo Cryl XK-188 | 10 | 10 | 10 | 10 | 10 | |
| | | ARROW BASE SB-1230N | 10 | 10 | 10 | 10 | 10 | |
| Organic solvent | | 2PrOH | | | | | | |
| | | 1,2-PD | 5 | 5 | 5 | 5 | 5 | 5 |
| Preservative | | PROXEL GXL | 0.1 | 0.1 | 0.1 | 0.1 | 0.1 | 0.1 |
| Anti-foaming agent | | TEGO^{®} Fo amex 845 | 0.1 | 0.1 | 0.1 | 0.1 | 0.1 | 0.1 |
| Ion exchange water | | | 67.8 | 72.8 | 68.8 | 68.8 | 68.8 | 87.8 |
| Blending amount of surfactant of general formula (1) relative to resin (c) | | | 14.4% | 14.4% | 0.0% | 0.0% | 0.0% | - |

### [Table 2]

**Table 2**

| | | Name | Solid faction | Details | |
|---|---|---|---|---|---|
| Coagulant (A) | Metal salt | Calcium nitrate | 100% | | |
| | | Calcium lactate | 100% | | |
| | | Calcium formate | 100% | | |
| | | Calcium acetate | 100% | | |
| | | Magnesium acetate | 100% | | |
| | | Aluminum nitrate | 100% | | |
| | | Sodium nitrate | 100% | | |
| | Cationic polymer compound | PAA-HCL-3L | 50% | Polyallylamine hydrochloride manufactured by Nittobo Medical Co., Ltd. | |
| | | PAS-M-1 | 50% | Polymethyldiallylamine hydrochloride manufactured by Nittobo Medical Co., Ltd. | |
| Other coagulants | Organic acid | Malonic acid | 100% | | |
| Organic solvent | | 2PrOH | - | 2-propanol | Boiling point at one atmosphere: 83°C |
| | | MB | - | 3-methoxybutanol | Boiling point at one atmosphere: 150°C |
| | | 1,2-PD | - | 1,2-propanediol | Boiling point at one atmosphere: 188°C |
| | | EtOH | - | Ethanol | Boiling point at one atmosphere: 78°C |
| | | 1,3-PD | - | 1,3-propanediol | Boiling point at one atmosphere: 214°C |
| | | 1,5-PD | - | 1,5-pentanediol | Boiling point at one atmosphere: 242°C |
| | | Gly | - | Glycerin | Boiling point at one atmosphere: 290°C |

### [Table 3]

**Table 3**

| | | Name | Solid fraction | Details |
|---|---|---|---|---|
| Surfactant (B) | Surfactant in general formula (1) | Sufactant 1 | 100% | R in general formula (1) = lauryl growp, m = 2, o = 2, n = 0, p = 0 |
| | | Surfactant 2 | 100% | R in general formula (1) = stearyl growp, m = 2, o = 2, n = 0, p = 0 |
| | | Surfactant 3 | 100% | R in general formula (1) = oleyl group, m= 2, o = 2, n= 0, p = 0 |
| | | Surfactant 4 | 100% | R in general formula (1) = beef tallow akyl group, m = 2, o = 2, n = 0, p = 0 |
| | | Surfactant 5 | 100% | R in general formula (1) = palm alkyl group, m = 2, o = 2, n = 0, p = 0 |
| | | Surfactant 6 | 100% | R in general formula (1) = hexyl group, m = 2, o = 2, n = 0, p = 0 |
| | | Surfactant 7 | 100% | R in general formula (1) = ethylhexyl group, m = 2, o = 2, n = 0, p = 0 |
| | | Surfactant 8 | 100% | R in general formula (1) = behenyl group, m = 2, o = 2, n = 0, p = 0 |
| | | Surfactant 9 | 100% | R in general formula (1) = lauryl group, m = 100, o = 100, n = 0, p = 0 |
| | | Surfactant 10 | 100% | R in general formula (1) = lauryl group, m = 20, o = 30, n = 0, p = 0 |
| | | Surfactant 11 | 100% | R in general formula (1) = lauryl group, m = 1, o = 1, n = 0, p = 0 |
| | | Surfactant 12 | 100% | R in general formula (1) = lauryl group, m = 5, o = 5, n = 0, p = 0 |
| | | Surfactant 13 | 100% | R in general formula (1) = lauryl group, m = 50, o = 60, n = 0, p = 0 |
| | | Surfactant 14 | 100% | R in general formula (1) = lauryl group, m = 80, o = 75, n = 0, p = 0 |
| | | Surfactant 15 | 100% | R in general formula (1) = lauryl group, m = 2, o = 2, n = 1, p = 1 |
| | | Surfactant 16 | 100% | R in general formula (1) = lauryl group, m= 100, o = 90, n = 80, p = 85 |
| Other Surfactants | Acetylene diol-based | Surfynol 104 | 100% | Acetylenediol-based surfactant manufactured by Air Products and Chemicals, Inc. (HLB = 4.0) |
| | | Surfynol 440 | 100% | Acetylenediol-based surfactant manufactured by Air Products and Chemicals, I_{nc}. (HLB = 8) |
| | | Surfynol 465 | 100% | Acetylenediol-based surfactant manufactured by Air Products and Chemicals, Inc. (HLB = 13) |
| | | Surfynol 485 | 100% | Acetylenediol-based surfactant manufactured by Air Products and Chemicals, I_{nc}. (HLB = 17) |
| | | Surfynol SE | 81% | Acetylenediol-based surfactant manufactured by Air Products and Chemicals, Inc. (HLB = 6) |
| | Silicone-based | BYK-349 | 100% | Silicone-based surfactant manufactured by BYK Chemie Japan |
| | Polyoxyethylene alkyl ether-based | EMULGEN 1150S-60 | 60% | Polyoxyethylene alkyl ether-based surfactant manufactured by Kao Corporation |
| Anti-foaming agent | | TEGO^{®} Foamex 845 | 20% | Organic modified siloxane copolymer/silica manufactured by Evonik Japan |
| PH adjusting agent | | TEA | - | Triethanolamine |
| Preservative | | PROXEL GXL | 20% | 1,2-benzisothiazol-3-one (dipropylene glycol solution) manufactured by Arch Chemicals Inc. |

### [Table 4]

**Table 4**

| | | Name | Solid fraction | Details | |
|---|---|---|---|---|---|
| | Water-soluble resin | PVA103 | 100% | Polyvinyl alcohol (nonionic) manufactured by KURARAY Co., Ltd. | |
| | | DISPER BYK-190 | 40% | Styrene-maleic acid-based resin (anionic) manufactured by BYK Chemie Japan | |
| | Resin particle | Superchlon E-480T | 30% | Chlorinated polyolefin resin microparticle (anionic) manufactured by Nippon Paper Chemicals Co., Ltd | D50: 75 nm |
| | | Auroren AE-301 | 30% | Non-chlorinated polyolefin resin microparticle (anionic) manufactured by Nippon Paper Chemicals Co., Ltd | D50: 75 nm |
| | | ARROWBASE SB-1230N | 25% | Non-chlorinated polyolefin resin microparticle (anionic) manufactured by Unitika Ltd. | D50: 85 nm |
| | | ARROWBASE SB-1200 | 25% | Non-chlorinated polyolefin resin microparticle (anionic) manufactured by Unitika Ltd. | D50: 110 nm |
| Resin (C) | | Neo Cryl XK-190 | 45% | Acrylic resin particle (anionic) manufactured by DSM Coating Resins | D50: 100 nm |
| | | Neo Cryl XK-188 | 44.5% | Acrylic resin particle (anionic) manufactured by DSM Coating Resins | D50: 120 nm |
| | | Neo Rez R-600 | 33% | Polyurethane resin particle (anionic) manufactured by DSM Coating Resins | D50: 70 nm |
| | | Neo Rez R-9621 | 38% | Polyurethane resin particle (anionic) manufactured by DSM Coating Resins | D50: 40 nm |
| | | HITEC E-5403P | 30% | Polyethylene resin particle (nonionic) manufactured by Toho Chemical Industry Co., Ltd. | D50: 50 nm |
| | | Chemipearl W950 | 40% | Polyethylene resin particle (anionic) manufactured by Mitsui Chemical Inc. | D50: 500 nm |
| | | SUPERFLEX 620 | 30% | Polyurethane resin microparticle (cationic) manufactured by DKS Co., Ltd. | D50: 20 nm |
| | | SUPERFLEX 650 | 26% | Polyurethane resin microparticle (cationic) manufactured by DKS Co., Ltd. | D50: 10 nm |

### <Evaluation of Storage Stability of Pretreatment Liquid>

For the pretreatment liquids produced above, the viscosity at 25°C was measured using an E-type viscometer (TVE-20L manufactured by Toki Sangyo Co., Ltd.), and the pretreatment liquid was then placed in a sealed container and stored in a still state in a thermostatic chamber set to 50°C. The sealed container took out from the thermostatic chamber weekly, the viscosity and the storage stability of the pretreatment liquid was evaluated by calculating the change in viscosity during storage. The evaluation criteria are as follows, and an AA, A, or B evaluation is deemed to be a practically applicable level.

### (Evaluation criteria)

AA: the change in viscosity after four weeks storage was less than ±5%
A: the change in viscosity after three weeks storage was less than ±5, but the change in viscosity after four weeks storage was at least ±5%
B: the change in viscosity after two weeks storage was less than ±5%, but the change in viscosity after three weeks storage was at least ±5%
C: the change in viscosity after one week storage was less than ±5%, but the change in viscosity after two weeks storage was at least ±5%
D: the change in viscosity after one week storage was at least ±5%

### <Production Example of Film Substrate Coated with Pretreatment Liquid>

A K Control Coater K202 manufactured by Matsuo Sangyo Co., Ltd. and a wire bar No. 0 were used to apply the pretreatment liquids prepared as described above to a wet film thickness of 4.0 ± 0.2 µm on the substrate. Subsequently, the substrate to which the pretreatment liquid had been applied was dried in a 70°C air oven for 1 minute to produce a substrate having the pretreatment liquid applied thereon.

### <Low Absorption Substrate Used in Evaluations>

OK topcoat + coated paper made by Oji Paper Co., Ltd. 104.7 g/m²
PET: polyethylene terephthalate film "FE2001" (thickness of 12 µm) manufactured by Futamura Chemical Co. Ltd.

### <Evaluation of Coating Unevenness of Pretreatment Liquid>

The exterior of a substrate coated with a pretreatment liquid based on the method described was observed visually, and with a magnifying glass. The evaluation criteria are as follows, and an AA, A, or B evaluation is deemed to be a practically applicable level.

### (Evaluation criteria)

AA: no cissing or coating unevenness was observed visually or with a magnifying glass
A: very little coating unevenness when observed with a magnifying glass, but no cissing or coating unevenness was observed visually
B: some coating unevenness when observed with a magnifying glass, but no cissing or coating unevenness was observed visually
C: cissing or coating unevenness was observed visually

**[Table 5-1]**

| **Table 5** | | | | |
|---|---|---|---|---|
| | Pretreatment liquid | Evaluation result | | |
| | | Storage stability | Coating unevenness | |
| | | | OK topcoat | PET film |
| Example 1 | 1 | AA | A | A |
| Example 2 | 2 | AA | A | A |
| Example 3 | 3 | AA | A | A |
| Example 4 | 4 | AA | A | A |
| Example 5 | 5 | AA | A | A |
| Example 6 | 6 | AA | A | A |
| Example 7 | 7 | AA | A | A |
| Example 8 | 8 | A | A | B |
| Example 9 | 9 | A | A | B |
| Example 10 | 10 | AA | A | A |
| Example 11 | 11 | AA | A | A |
| Example 12 | 12 | AA | A | A |
| Example 13 | 13 | AA | A | A |
| Example 14 | 14 | AA | A | A |
| Example 15 | 15 | AA | A | A |
| Example 16 | 16 | AA | A | A |
| Example 17 | 17 | AA | A | A |
| Example 18 | 18 | AA | A | A |
| Example 19 | 19 | AA | AA | AA |
| Example 20 | 20 | AA | AA | AA |
| Example 21 | 21 | AA | AA | AA |
| Example 22 | 22 | AA | AA | AA |
| Example 23 | 23 | AA | AA | AA |
| Example 24 | 24 | AA | AA | AA |
| Example 25 | 25 | AA | AA | AA |
| Example 26 | 26 | AA | AA | AA |
| Example 27 | 27 | AA | AA | AA |
| Example 28 | 28 | AA | AA | AA |
| Example 29 | 29 | AA | AA | AA |
| Example 30 | 30 | AA | AA | AA |
| Example 31 | 31 | AA | AA | AA |
| Example 32 | 32 | AA | AA | AA |
| Example 33 | 33 | AA | AA | AA |
| Example 34 | 34 | AA | AA | AA |

**[Table 5-2]**

| **Table 5** | | | | |
|---|---|---|---|---|
| | Pretreatment liquid | Evaluation result | | |
| | | Storage stability | Coating unevenness | |
| | | | OK topcoat | PET film |
| Example 35 | 35 | AA | AA | AA |
| Example 36 | 36 | AA | AA | AA |
| Example 37 | 37 | AA | AA | AA |
| Example 38 | 38 | AA | AA | AA |
| Example 39 | 39 | AA | AA | AA |
| Example 40 | 40 | AA | AA | AA |
| Example 41 | 41 | AA | AA | AA |
| Example 42 | 42 | AA | AA | AA |
| Example 43 | 43 | AA | AA | AA |
| Example 44 | 44 | AA | AA | AA |
| Example 45 | 45 | AA | AA | AA |
| Example 46 | 46 | AA | AA | AA |
| Example 47 | 47 | AA | AA | AA |
| Example 48 | 48 | AA | AA | AA |
| Example 49 | 49 | AA | AA | AA |
| Example 50 | 50 | AA | AA | AA |
| Example 51 | 51 | AA | AA | AA |
| Example 52 | 52 | AA | AA | AA |
| Example 53 | 53 | B | AA | A |
| Example 54 | 54 | A | AA | AA |
| Example 55 | 55 | AA | AA | AA |
| Example 56 | 56 | A | AA | AA |
| Example 57 | 57 | AA | AA | AA |
| Example 58 | 58 | AA | AA | AA |
| Example 59 | 59 | AA | AA | AA |
| Example 60 | 60 | AA | AA | AA |
| Example 61 | 61 | AA | AA | AA |
| Example 62 | 62 | AA | AA | AA |
| Example 63 | 63 | AA | AA | AA |
| Example 64 | 64 | AA | AA | AA |
| Example 65 | 65 | AA | AA | AA |
| Example 66 | 66 | AA | AA | AA |
| Example 67 | 67 | AA | AA | AA |
| Example 68 | 68 | AA | AA | AA |

**[Table 5-3]**

| **Table 5** | | | | |
|---|---|---|---|---|
| | Pretreatment liquid | Evaluation result | | |
| | | Storage stability | Coating unevenness | |
| | | | OK topcoat | PET film |
| Example 69 | 69 | A | AA | AA |
| Example 70 | 70 | B | AA | AA |
| Example 71 | 71 | AA | AA | AA |
| Example 72 | 72 | AA | AA | AA |
| Example 73 | 73 | AA | AA | A |
| Example 74 | 74 | AA | AA | AA |
| Example 75 | 75 | AA | AA | A |
| Example 76 | 76 | AA | AA | AA |
| Example 77 | 77 | AA | A | A |
| Example 78 | 78 | AA | A | A |
| Example 79 | 79 | AA | AA | AA |
| Example 80 | 80 | AA | AA | AA |
| Example 81 | 81 | AA | AA | AA |
| Example 82 | 82 | AA | AA | AA |
| Example 83 | 83 | AA | AA | AA |
| Example 84 | 84 | AA | AA | AA |
| Example 85 | 85 | AA | AA | A |
| Example 86 | 86 | AA | AA | AA |
| Example 87 | 87 | AA | AA | AA |
| Example 88 | 88 | A | AA | AA |
| Example 89 | 89 | AA | AA | AA |
| Example 90 | 90 | AA | AA | AA |
| Example 91 | 91 | AA | AA | AA |
| Example 92 | 92 | A | AA | A |
| Example 93 | 93 | AA | AA | AA |
| Example 94 | 94 | AA | AA | AA |
| Example 95 | 95 | AA | AA | AA |
| Example 96 | 96 | AA | AA | AA |
| Example 97 | 97 | AA | AA | AA |
| Example 98 | 98 | AA | AA | AA |
| Example 99 | 99 | AA | AA | AA |
| Example 100 | 100 | AA | AA | AA |

**[Table 5-4]**

| **Table 5** | | | | |
|---|---|---|---|---|
| | Pretreatment liquid | Evaluation result | | |
| | | Storage stability | Coating unevenness | |
| | | | OK topcoat | PET film |
| Comparative Example 1 | 101 | C | A | A |
| Comparative Example 2 | 102 | AA | B | C |
| Comparative Example 3 | 103 | D | B | C |
| Comparative Example 4 | 104 | D | B | C |
| Comparative Example 5 | 105 | C | B | C |
| Comparative Example 6 | 106 | AA | C | C |

### <Production of Aqueous Inkjet Ink>

### <Production Example for Pigment Dispersing Resin 1>

A reaction container fitted with a gas inlet tube, a thermometer, a condenser and a stirrer was charged with 95 parts of butanol, and the container was flushed with nitrogen gas. The inside of the container was heated to 110°C, and a mixture containing 45 parts of styrene, 30 parts of acrylic acid and 25 parts of lauryl methacrylate as polymerizable monomers and 6 parts of a polymerization initiator V-601 (manufactured by Wako Pure Chemical Industries, Ltd.) was added dropwise to the container over a period of two hours to achieve a polymerization reaction. Following completion of the dropwise addition, the reaction was continued at 110°C for a further three hours, an additional 0.6 parts of V-601 (manufactured by Wako Pure Chemical Industries, Ltd.) was then added, and the reaction was continued at 110°C for a further one hour, thus obtaining a solution of a pigment dispersing resin 1. Following cooling of the solution to room temperature, dimethylaminoethanol was added to completely neutralize the solution, and 100 parts of water was then added to generate an aqueous solution. Subsequently, the aqueous solution was heated to at least 100°C, and the butanol was removed by azeotropic distillation with water so as to adjust the solid fraction to 30%, an aqueous solution (solid fraction: 30%) of the pigment dispersing resin 1 was obtained. Note that, the acid value of the pigment dispersing resin 1, measured using the method described above, was 230 mgKOH/g, and the weight average molecular weight was 25,000.

### <Production Examples for Aqueous Solutions of Pigment Dispersing Resins 2 to 4>

With the exception of altering the types and amounts of the polymerizable monomers as shown below in Table 6, aqueous solutions (solid fraction: 30%) of pigment dispersing resins 2 to 4 were obtained in the same manner as the above pigment dispersing resin 1.

### [Table 6]

**Table 6**

| | | Pigment dispersing resin | | | |
|---|---|---|---|---|---|
| | | 1 | 2 | 3 | 4 |
| Polymerizable monomer | Styrene | 45 | 45 | 45 | 45 |
| | Acrylic acid | 30 | 30 | 30 | 30 |
| | 2-ethylhexyl acrylate | | | | 25 |
| | Behenyl acrylate | | | 25 | |
| | Butyl acrylate | | 25 | | |
| | Lauryl methacrylate | 25 | | | |
| Acid value | | 230 | 225 | 232 | 230 |
| Weight average molecular weight | | 25,000 | 15,000 | 20,000 | 13,000 |

### <Production Examples for Pigment Dispersion Liquids 1C, 1M, 1Y, and 1K>

Twenty parts of LIONOL BLUE 7358G (C.I. Pigment Blue 15:3) manufactured by Toyo Color Co., Ltd., 20 parts of the aqueous solution (solid fraction: 30%) of the pigment dispersing resin 1 and 60 parts of water were mixed together and premixed using a stirrer, and the mixture was then subjected to a main dispersion using a Dyno-Mill with a capacity of 0.6 L filled with 1,800 g of zirconia beads of diameter 0.5 mm, thus obtaining a pigment dispersion liquid 1C. Further, with the exception of replacing the C.I. Pigment Blue 15:3 with each of the pigments shown below, pigment dispersion liquids 1M (Magenta), 1Y (Yellow), and 1K (Black) were obtained in the same manner as the pigment dispersion liquid 1C.
Magenta: FASTOGEN SUPER MAGENTA RG (C.I. Pigment Red 122), manufactured by DIC Corporation
Yellow: LIONOL YELLOW TT-1405G (C.I. Pigment Yellow 14), manufactured by Toyo Color Co., Ltd
Black: PrinteX 85 manufactured by Orion Engineered Carbons S.A (Carbon black)

### <Production Examples for Pigment Dispersion Liquids 2 to 4 (C, M, Y, K)>

With the exception of using the aqueous solutions (solid fraction: 30%) of each of the pigment dispersing resins 2 to 4 as the pigment dispersing resin, pigment dispersion liquids 2 to 4 (each including C, M, Y and K) were obtained using the same methods as that described for the pigment dispersion liquids 1C, 1M, 1Y and 1K.

### <Production Example for Pigment Dispersion Liquid 1W>

Forty parts of TIPAQUE CR-90-2 (titanium oxide) manufactured by Ishihara Sangyo Kaisha, Ltd., 20 parts of the aqueous solution (solid fraction: 30%) of the pigment dispersing resin 1, and 40 parts of water were mixed, and following premixing using a stirrer, a Dyno-Mill with a capacity of 0.6 L filled with 1,800 g of zirconia beads of diameter 0.5 mm was used to perform the main dispersion, thus obtaining a pigment dispersion liquid 1W (pigment concentration: 40%).

### <Production Example for Pigment Dispersion Liquids 2W to 4W>

With the exception of using the aqueous solution (solid fraction: 30%) of the pigment dispersing resins 2 to 4 as the pigment dispersing resin, pigment dispersion liquids 2W to 4W were obtained using the same methods as that described for the pigment dispersion liquid 1W.

### <Production Example of Aqueous Inkjet Color Ink Set 1 (CMYK)>

The materials listed below were added sequentially to a mixing container fitted with a stirrer, and thorough stirring was performed until a uniform mixture was obtained. Subsequently, filtration was performed using a membrane filter having a pore size of 1 µm to remove coarse particles that can cause inkjet head blockages, thus obtaining an aqueous inkjet cyan ink 1. Further, with the exception of using each of the pigment dispersion liquids 1M, 1Y and 1K instead of the pigment dispersion liquid 1C, an aqueous inkjet ink set 1 composed of the four colors of cyan (C), magenta (M), yellow (Y) and black (K) was obtained.

| | |
|---|---|
| Pigment dispersion liquid 1C | 25 parts |
| NeoCrylXK-190 (solid fraction 45%) | 15 parts |
| 1,2-propanediol | 20 parts |
| KF-6015 | 1 part |
| PROXEL GXL | 0.1 part |
| Ion-exchanged water | 38.9 parts |

In the above production example, NeoCryl XK-190 is an acrylic resin emulsion (solid fraction: 45%) manufactured by DSM Coating Resins.

### <Production Example of Inkjet Color Ink Sets 2 to 21 (CMYK)>

With the exception of using the materials described in Table 7, Inkjet color ink sets 2 to 21 each composed of the four colors; cyan (C), magenta (M), yellow (Y), and black (K) were obtained using the same methods as that described for the Inkjet ink set 1.

Note that, abbreviations and details for those materials included in Table 7 are as follows:
PGmME: propylene glycol monomethyl ether (boiling point at one atmosphere at 120°C)
MB: 3-methoxybutanol (boiling point at one atmosphere at 150°C)
1,2-PD: 1,2-propanediol (boiling point at one atmosphere at 188°C)
1,2-BD: 1,2-butanediol (boiling point at one atmosphere at 192°C)
1,3-PD: 1,3-propanediol (boiling point at one atmosphere at 214°C)
1,2-HD: 1,2-hexanediol (boiling point at one atmosphere at 224°C)
TEGmEE: triethylene glycol monoethyl ether (boiling point at one atmosphere at 256°C)
KF-6015: siloxane-based surfactant manufactured by Nissin Chemical Industry Co., Ltd.

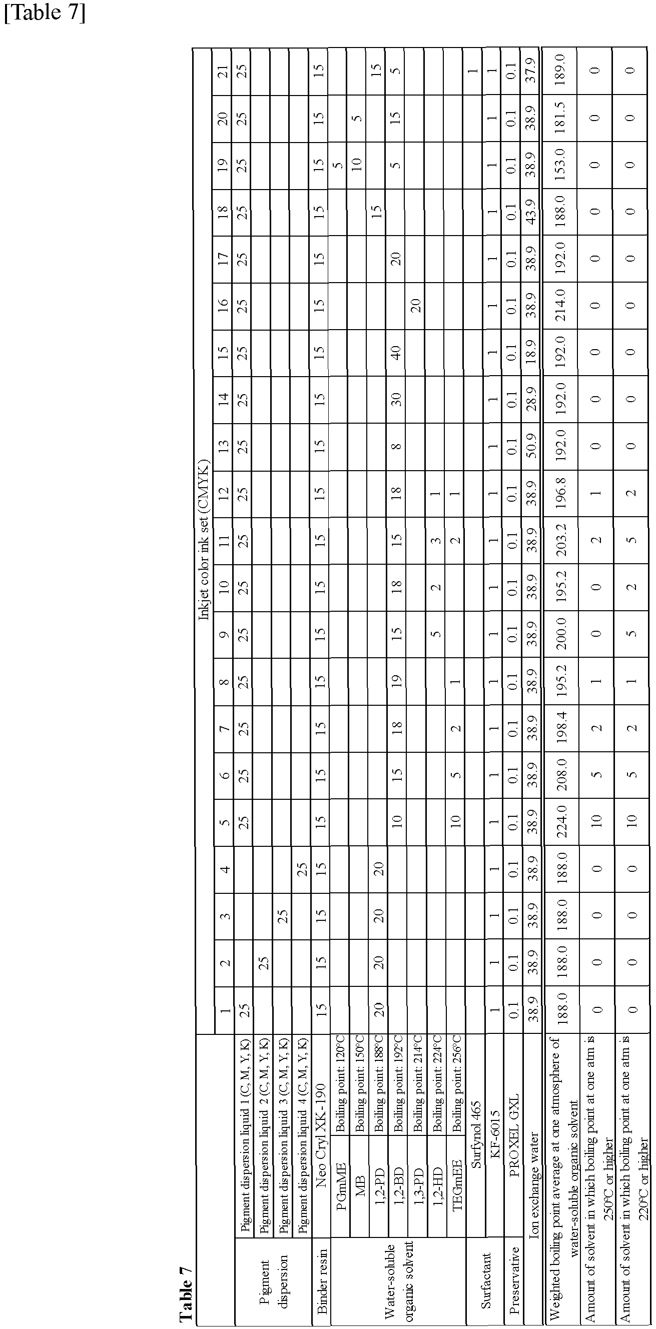

### <Production Examples for Aqueous Inkjet White Inks 1 to 21>

With the exception of using the materials described in Table 8, the aqueous inkjet white inks 1 to 21 were obtained by the same methods as the inkjet cyan ink 1.

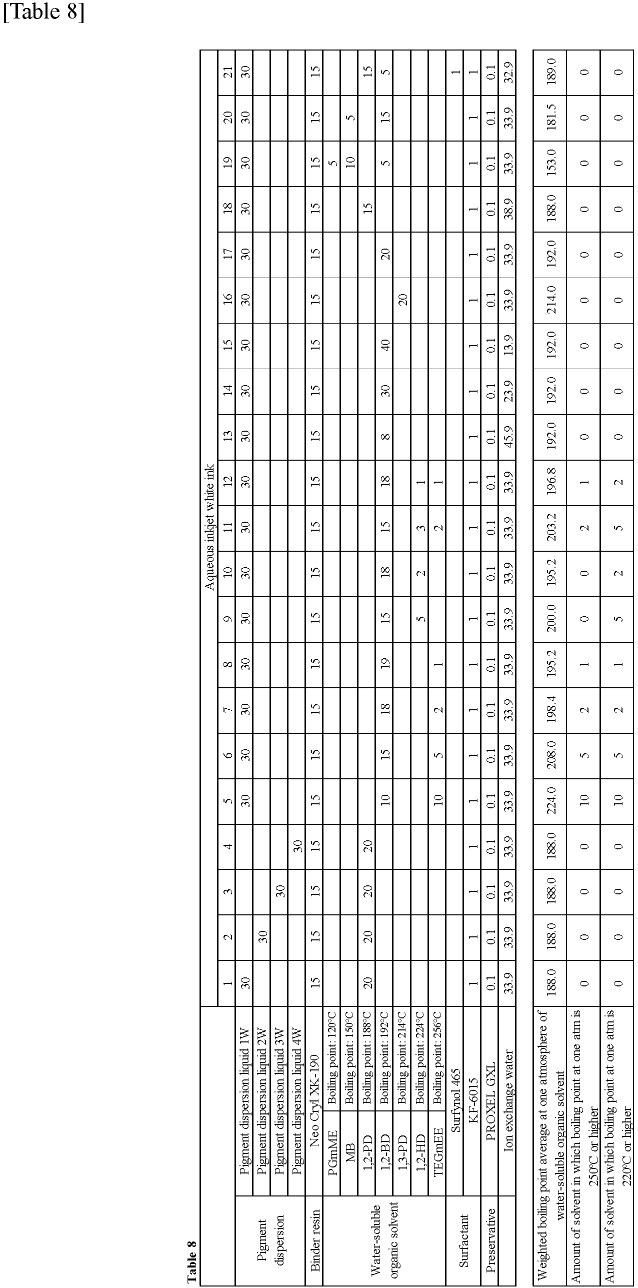

Tables 7 and 8 collectively show the weighted boiling point average at one atmosphere (°C), and the amount (% by mass) of water-soluble organic solvent having a boiling point at one atmosphere of 250°C (or 220°C) or higher of the water-soluble organic solvent contained in each ink.

### <Aqueous Inkjet Ink Sets 1 to 11 (CMYKW)>

The following evaluations were performed using the combinations of the color inks and the white ink illustrated in Table 9 as an inkjet ink set. The results are illustrated in Table 10.

### [Table 9]

**Table 9**

| | Aqueous inkjet ink set | | | | | | | | | | | | | | | | | | | | |
|---|---|---|---|---|---|---|---|---|---|---|---|---|---|---|---|---|---|---|---|---|---|
| | 1 | 2 | 3 | 4 | 5 | 6 | 7 | 8 | 9 | 10 | 11 | 12 | 13 | 14 | 15 | 16 | 17 | 18 | 19 | 20 | 21 |
| Inkjet color ink set (CMYK) | 1 | 2 | 3 | 4 | 5 | 6 | 7 | 8 | 9 | 10 | 11 | 12 | 13 | 14 | 15 | 16 | 17 | 18 | 19 | 20 | 21 |
| Inkjet white ink | 1 | 2 | 3 | 4 | 5 | 6 | 7 | 8 | 9 | 10 | 11 | 12 | 13 | 14 | 15 | 16 | 17 | 18 | 19 | 20 | 21 |

**[Table 10-1]**

| **Table 10** | | | | | | | | | |
|---|---|---|---|---|---|---|---|---|---|
| | Pretreatment liquid | Inkjet ink set | Evaluation result | | | | | | |
| | | | Mixed color bleeding | | Solid filling | | Drying property | Adhesion | Coating film durability |
| | | | OK topcoat | PET film | OK topcoat | PET film | | | |
| Example 101 | 1 | 1 | A | A | A | A | AA | B | B |
| Example 102 | 2 | 1 | A | A | A | A | AA | B | B |
| Example 103 | 3 | 1 | A | A | A | A | AA | A | A |
| Example 104 | 4 | 1 | A | A | A | A | AA | A | A |
| Example 105 | 5 | 1 | A | A | A | A | AA | A | A |
| Example 106 | 6 | 1 | A | A | A | A | AA | A | A |
| Example 107 | 7 | 1 | A | A | A | A | AA | A | A |
| Example 108 | 8 | 1 | B | B | B | B | AA | A | A |
| Example 109 | 9 | 1 | A | B | A | B | AA | A | A |
| Example 110 | 10 | 1 | B | B | B | B | AA | A | A |
| Example 111 | 11 | 1 | A | A | A | A | AA | A | A |
| Example 112 | 12 | 1 | A | A | A | A | AA | A | A |
| Example 113 | 13 | 1 | A | A | A | A | AA | A | A |
| Example 114 | 14 | 1 | A | A | A | A | AA | A | A |
| Example 115 | 15 | 1 | A | A | A | A | AA | A | A |
| Example 116 | 16 | 1 | A | A | A | A | AA | A | A |
| Example 117 | 17 | 1 | A | A | A | A | AA | A | A |
| Example 118 | 18 | 1 | A | A | A | A | AA | A | A |
| Example 119 | 19 | 1 | AA | AA | AA | AA | AA | B | B |
| Example 120 | 20 | 1 | AA | AA | AA | AA | AA | B | B |
| Example 121 | 21 | 1 | AA | AA | AA | AA | AA | A | A |
| Example 122 | 22 | 1 | AA | AA | AA | AA | AA | A | A |
| Example 123 | 23 | 1 | AA | AA | AA | AA | AA | A | A |
| Example 124 | 24 | 1 | AA | AA | AA | AA | AA | A | A |
| Example 125 | 25 | 1 | AA | AA | AA | AA | AA | A | A |
| Example 126 | 26 | 1 | AA | AA | AA | AA | AA | A | A |
| Example 127 | 27 | 1 | AA | AA | AA | AA | AA | A | A |
| Example 128 | 28 | 1 | AA | AA | AA | AA | AA | A | A |
| Example 129 | 29 | 1 | AA | AA | AA | AA | AA | B | A |
| Example 130 | 30 | 1 | AA | AA | AA | AA | AA | B | A |
| Example 131 | 31 | 1 | AA | AA | AA | AA | AA | AA | AA |
| Example 132 | 32 | 1 | AA | AA | AA | AA | AA | AA | AA |
| Example 133 | 33 | 1 | AA | AA | AA | AA | AA | AA | AA |
| Example 134 | 34 | 1 | AA | AA | AA | AA | AA | AA | AA |
| Example 135 | 35 | 1 | AA | AA | AA | AA | AA | A | A |
| Example 136 | 36 | 1 | AA | AA | AA | AA | AA | AA | AA |
| Example 137 | 37 | 1 | AA | AA | AA | AA | AA | AA | AA |
| Example 138 | 38 | 1 | AA | AA | AA | AA | AA | AA | AA |
| Example 139 | 39 | 1 | AA | AA | AA | AA | AA | AA | AA |
| Example 140 | 40 | 1 | AA | AA | AA | AA | AA | AA | AA |
| Example 141 | 41 | 1 | AA | AA | AA | AA | AA | AA | AA |
| Example 142 | 42 | 1 | AA | AA | AA | AA | A | AA | AA |
| Example 143 | 43 | 1 | AA | AA | AA | AA | A | B | B |
| Example 144 | 44 | 1 | AA | AA | AA | AA | AA | A | A |
| Example 145 | 45 | 1 | AA | AA | AA | AA | AA | A | A |
| Example 146 | 46 | 1 | AA | AA | AA | AA | AA | A | A |
| Example 147 | 47 | 1 | AA | AA | AA | AA | AA | A | A |
| Example 148 | 48 | 1 | A | A | A | A | AA | A | A |
| Example 149 | 49 | 1 | A | A | A | A | AA | A | A |
| Example 150 | 50 | 1 | B | B | B | B | AA | A | A |

**[Table 10-2]**

| **Table 10** | | | | | | | | | |
|---|---|---|---|---|---|---|---|---|---|
| | Pretreatment liquid | Inkjet ink set | Evaluation result | | | | | | |
| | | | Mixed color bleeding | | Solid filling | | Drying property | Adhesion | Coating film durability |
| | | | OK topcoat | PET film | OK topcoat | PET film | | | |
| Example 151 | 51 | 1 | B | B | B | B | AA | A | A |
| Example 152 | 52 | 1 | B | B | B | B | AA | A | A |
| Example 153 | 53 | 1 | A | B | A | B | AA | A | A |
| Example 154 | 54 | 1 | A | A | A | A | AA | A | A |
| Example 155 | 55 | 1 | AA | AA | AA | AA | AA | A | A |
| Example 156 | 56 | 1 | A | B | AA | AA | A | A | A |
| Example 157 | 57 | 1 | AA | A | AA | AA | AA | A | A |
| Example 158 | 58 | 1 | A | A | AA | AA | A | A | A |
| Example 159 | 59 | 1 | AA | AA | AA | AA | AA | A | A |
| Example 160 | 60 | 1 | AA | AA | AA | AA | AA | A | A |
| Example 161 | 61 | 1 | AA | AA | AA | AA | AA | A | A |
| Example 162 | 62 | 1 | AA | AA | AA | AA | AA | A | A |
| Example 163 | 63 | 1 | B | B | B | B | AA | A | A |
| Example 164 | 64 | 1 | B | B | A | A | AA | A | A |
| Example 165 | 65 | 1 | A | A | AA | AA | AA | A | A |
| Example 166 | 66 | 1 | AA | AA | AA | AA | AA | A | A |
| Example 167 | 67 | 1 | AA | AA | A | AA | AA | A | A |
| Example 168 | 68 | 1 | AA | AA | AA | AA | AA | A | A |
| Example 169 | 69 | 1 | AA | AA | A | A | A | A | A |
| Example 170 | 70 | 1 | AA | AA | A | A | B | B | B |
| Example 171 | 71 | 1 | AA | AA | AA | AA | AA | A | A |
| Example 172 | 72 | 1 | AA | AA | AA | AA | AA | A | A |
| Example 173 | 73 | 1 | AA | A | AA | A | AA | A | A |
| Example 174 | 74 | 1 | AA | AA | AA | AA | AA | A | A |
| Example 175 | 75 | 1 | AA | A | AA | A | AA | A | A |
| Example 176 | 76 | 1 | AA | AA | AA | AA | AA | A | A |
| Example 177 | 77 | 1 | A | A | A | A | AA | A | A |
| Example 178 | 78 | 1 | A | A | A | A | AA | A | A |
| Example 179 | 79 | 1 | AA | AA | AA | AA | AA | A | A |
| Example 180 | 80 | 1 | AA | AA | AA | AA | AA | A | A |
| Example 181 | 81 | 1 | AA | AA | AA | AA | AA | A | A |
| Example 182 | 82 | 1 | AA | A | AA | A | A | A | A |
| Example 183 | 83 | 1 | A | B | A | B | B | B | B |
| Example 184 | 84 | 1 | B | B | B | B | B | B | B |
| Example 185 | 85 | 1 | AA | A | AA | A | AA | A | A |
| Example 186 | 86 | 1 | AA | AA | AA | AA | AA | A | A |
| Example 187 | 87 | 1 | AA | AA | AA | AA | AA | A | A |
| Example 188 | 88 | 1 | AA | A | AA | A | A | A | A |
| Example 189 | 89 | 1 | AA | AA | AA | AA | AA | A | A |
| Example 190 | 90 | 1 | AA | AA | AA | AA | AA | A | A |
| Example 191 | 91 | 1 | A | A | A | A | A | A | A |
| Example 192 | 92 | 1 | A | A | A | A | B | B | B |
| Example 193 | 93 | 1 | AA | AA | AA | AA | AA | A | A |
| Example 194 | 94 | 1 | AA | AA | AA | AA | AA | A | A |
| Example 195 | 95 | 1 | AA | AA | AA | AA | AA | AA | AA |
| Example 196 | 96 | 1 | AA | AA | AA | AA | AA | AA | AA |
| Example 197 | 97 | 1 | AA | AA | AA | AA | AA | AA | AA |
| Example 198 | 98 | 1 | AA | AA | AA | AA | AA | AA | AA |
| Example 199 | 99 | 1 | AA | A | AA | A | A | AA | AA |
| Example 200 | 100 | 1 | A | A | A | A | B | A | A |

**[Table 10-3]**

| **Table 10** | | | | | | | | | |
|---|---|---|---|---|---|---|---|---|---|
| | Pretreatment liquid | Inkjet ink set | Evaluation result | | | | | | |
| | | | Mixed color bleeding | | Solid filling | | Drying property | Adhesion | Coating film durability |
| | | | OK topcoat | PET film | OK topcoat | PET film | | | |
| Example 201 | 95 | 2 | AA | AA | AA | AA | A | A | AA |
| Example 202 | 95 | 3 | AA | AA | AA | AA | AA | AA | AA |
| Example 203 | 95 | 4 | AA | AA | AA | AA | A | AA | AA |
| Example 204 | 95 | 5 | B | B | B | B | B | B | B |
| Example 205 | 95 | 6 | A | B | A | B | B | B | B |
| Example 206 | 95 | 7 | A | B | A | B | A | A | B |
| Example 207 | 95 | 8 | A | A | A | A | A | A | A |
| Example 208 | 95 | 9 | A | B | A | B | A | A | A |
| Example 209 | 95 | 10 | A | A | A | A | A | A | A |
| Example 210 | 95 | 11 | A | B | A | B | A | B | B |
| Example 211 | 95 | 12 | A | A | A | A | A | B | A |
| Example 212 | 95 | 13 | AA | A | AA | AA | AA | AA | AA |
| Example 213 | 95 | 14 | AA | A | AA | AA | AA | AA | AA |
| Example 214 | 95 | 15 | AA | A | AA | AA | A | AA | A |
| Example 215 | 95 | 16 | A | A | AA | AA | A | A | A |
| Example 216 | 95 | 17 | AA | A | AA | AA | AA | AA | AA |
| Example 217 | 95 | 18 | AA | AA | AA | AA | AA | AA | AA |
| Example 218 | 95 | 19 | AA | AA | AA | A | AA | AA | AA |
| Example 219 | 95 | 20 | AA | AA | AA | AA | AA | AA | AA |
| Example 220 | 95 | 21 | AA | AA | AA | AA | AA | AA | AA |
| Comparative Example 7 | 101 | 1 | B | C | B | C | C | C | C |
| Comparative Example 8 | 102 | 1 | C | C | C | C | C | B | B |
| Comparative Example 9 | 103 | 1 | C | C | C | C | C | B | B |
| Comparative Example 10 | 104 | 1 | C | C | C | C | C | B | B |
| Comparative Example 11 | 105 | 1 | C | C | C | C | C | B | B |
| Comparative Example 12 | 106 | 1 | B | C | B | C | C | D | C |

### <Production Examples for Printed Matter>

An inkjet head KJ4B-QA (manufactured by Kyocera Corporation, design resolution: 600 dpi) was installed above a conveyor capable of transporting a substrate, and was filled with one of the aqueous inkjet ink sets produced above in the order K, C, M, and Y from the upstream side. Subsequently, the substrate coated with the pretreatment liquid that had been prepared in the manner described above was secured to the conveyor, the conveyor was driven at a constant speed, and when the substrate passed beneath the installed position of the inkjet head, each of the inkjet inks was discharged using a drop volume of 3 pL, thereby printing the images described below. Immediately after printing, the printed matter was placed in a 70°C air oven and dried for 3 minutes to complete production of the printed matter.

Printing was conducted with the conveyor drive speed set to one of three conditions, namely 25 m/minute, 50 m/minute, and 75 m/minute. Further, an image in which 5 cm × 5 cm solid patches were arranged adjacent to one another at a print ratio of 100% in the order CMYK (hereinafter, referred to as the "solid patches image"), a 4-color (CMYK) image in which the total print ratio (the total of the print ratios for each of the colors) was varied continuously from 40 to 320% (hereafter called the "gradation image". wherein the print ratio was the same for each color at each total print ratio), and a solid image printed using CMYK at a total print ratio of 320% (hereinafter, referred to as the "4C solid image", wherein the print ratio of each color was 80%), and printed items of each image were produced. Further, when using a PET film as the substrate, a W was solid printed on the image prepared by printing with the CMYK ink at a print ratio of 100% to create a printed matter.

### [Examples 101 to 220 and Comparative Examples 7 to 12]

Using the combinations of pretreatment liquids and aqueous inkjet ink sets shown below in Table 10, the printed matters were produced. Using these printed matters, or, the pretreatment liquid itself, the following evaluations were performed. Further, the evaluation results are as illustrated in Table 10.

### <Evaluation of Mixed Color Bleeding and Color Unevenness>

A gradation image printed matter prepared on a substrate coated with a pretreatment liquid under conveyor drive speed conditions of 25 m/minute, 50 m/minute, and 75 m/minute based on the methods described above was used. The mixed color bleeding and the color unevenness were evaluated by observing the dot shape of the image printed matter using an optical microscope at a magnification of 200x. The evaluation criteria are as follows, and an AA, A, or B evaluation is deemed to be a practically applicable level.

### (Evaluation Criteria)

AA: mixed color bleeding and color unevenness was not observed at 75 m/minute
A: mixed color bleeding and color unevenness was observed at 75 m/minute, but mixed color bleeding and color unevenness was not observed at 50 m/minute
B: mixed color bleeding and color unevenness was observed at 50 m/minute, but mixed color bleeding and color unevenness was not observed at 25 m/minute
C: mixed color bleeding and color unevenness was observed at 25 m/minute

### <Evaluation of Solid Filling>

Solid patches images at a print ratio of 100% were printed on a substrate coated with a pretreatment liquid under conveyor drive speed conditions of 25 m/minute, 50 m/minute, and 75 m/minute based on the methods described above. The filling was evaluated by observation using an optical microscope at a magnification of 200x, and verifying the presence of voids and streaks. The evaluation criteria are as follows, and an AA, A, or B evaluation is deemed to be a practically applicable level. Note that, the filling was evaluated for each solid printed matter prepared at the different conveyor speeds.

### (Evaluation Criteria)

AA: voids and streaks were not observed at all three printing speeds.
A: voids and streaks were not observed at 50 m/min and 75 m/min, but voids and streaks were observed at 100 m/min.
B: voids and streaks were not observed at 50 m/min, but voids and streaks were observed at 75 m/min and 100 m/min.
C: but voids and streaks were observed at all three printing speeds.

### <Evaluation of Adhesion>

4C solid patches image printed matter prepared on a substrate coated with a pretreatment liquid under conveyor drive speed conditions of 50 m/minute based on the methods described above were used. A cellophane tape manufactured by Nichiban Co., Ltd. (width: 18 mm) was adhered securely to the surface of the image printed matter, and the tip of the cellophane tape peeled away with the angle maintained at 90°. Moreover, the adhesion was evaluated by visually inspecting the surface of the printed matter and the cellophane tape following the peeling operation. The evaluation criteria are as follows, and an AA, A, or B evaluation is deemed to be a practically applicable level. Further, Table 10 shows the evaluation for the color that yielded the worst evaluation result among the 5 colors that were evaluated.

### (Evaluation Criteria)

AA: the peeled surface area was less than 5% of the cellophane-adhered surface
A: the peeled surface area was at least 5% but less than 10% of the cellophane-adhered surface
B: the peeled surface area was at least 10% but less than 20% of the cellophane-adhered surface
C: the peeled surface area was at least 20% but less than 30% of the cellophane-adhered surface
D: the peeled surface area was no less than 30% of the cellophane-adhered surface

### <Evaluation of Drying Property>

4C solid patches image printed matter prepared on a substrate coated with a pretreatment liquid under conveyor drive speed conditions of 50 m/minute based on the methods described above were used. Immediately after printing, the printed matter was placed in a 70°C air oven, and after each minute, the printed matter was removed from the air oven, and the drying property was evaluated by rubbing the surface with a finger and visually examining the state of the printed matter. The evaluation criteria are as follows, and an AA, A, or B evaluation is deemed to be a practically applicable level.

### (Evaluation Criteria)

AA: one minute after placing in the air oven, the printed matter had dried, and no ink adhered to the finger upon rubbing
A: ink adhered to the finger one minute after placing in the air oven, but no ink adhesion occurred after two minutes
B: ink adhered to the finger two minutes after placing in the air oven, but no ink adhesion occurred after three minutes
C: ink adhered to the finger from the printed matter even after three minutes in the air oven

### <Evaluation of Coating Film Durability>

4C solid patches image printed matter prepared on a PET film substrate coated with a pretreatment liquid under conveyor drive speed conditions of 50 m/minute based on the methods described above were used. Immediately after printing, the printed matter was placed in a 70°C air oven, and after drying for three minutes, the printed matter was removed from the air oven. The removed printed matter was rubbed with a cotton swab soaked in water. The coating film durability was evaluated by verifying the number of rubs until the ink peeled and the undercoat became visible. The evaluation criteria are as follows, and an AA, A, or B evaluation is a practically applicable level.

### (Evaluation Criteria)

AA: the number of rubs until the undercoat became visible was no less than 20 times
A: the number of rubs until the undercoat became visible was 15 to 19 times
B: the number of rubs until the undercoat became visible was 11 to 14 times
C: the number of rubs until the undercoat became visible was no more than 10 times

The pretreatment liquid 101 described in Table 1 is a system which used a coagulant and not a metal salt or a cationic polymer compound, the pretreatment liquid 102 is a system free of the coagulant (A), the pretreatment liquids 103 to 105 are systems free of the surfactant (B) in general formula (1), and the pretreatment liquid 106 is a system free of the resin (C). None of these pretreatment liquids reached a practical level in the plurality of items evaluated for the ink set.

On the other hand, it was verified that all of the pretreatment liquids 1 to 100 which simultaneously comprise the coagulant (A), the surfactant (B), and the resin (C) have a quality that is at least a practically applicable level for all of the items evaluated for the ink set. These results indicate that, if any one of the structural components is not present, the effect of the present invention cannot be exhibited, and as a result, the deterioration of the storage stability, the image quality, the adhesion, the drying property, and the coating film durability occurs.

## Claims

1. A pretreatment liquid that can be used together with an aqueous inkjet ink comprising a pigment and water, wherein
the pretreatment liquid comprises a coagulant (A), a surfactant (B), a resin (C) and water,
the coagulant (A) comprises a metal salt that includes at least a polyvalent metal salt, and
the surfactant (B) comprises a polyoxyalkylene alkylamine represented by the following general formula (1), wherein the blending amount of the polyoxyalkylene alkylamine represented by the general formula (1) is 0.5 to 100% by mass relative to the blending amount of the resin (C), wherein the pretreatment liquid further comprises an acetylene diol-based surfactant having an Hydrophile-Lipophile Balance (HLB value) of 4 to 14, wherein the HLB value is determined as specified in the description. 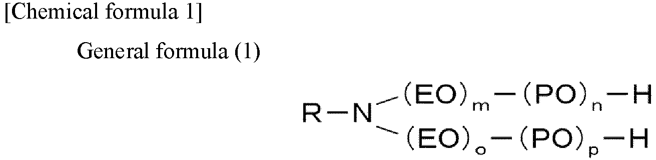 [In general formula (1),
R represents a linear or branched alkyl group having 6 to 22 carbon atoms, a linear or branched alkenyl group having 6 to 22 carbon atoms, a linear or branched alkylcarbonyl group having 6 to 22 carbon atoms, or, a linear or branched alkenylcarbonyl group having 6 to 22 carbon atoms.
EO represents an ethylene oxide group, and PO represents a propylene oxide group.
m represents the average addition mole number of EO and is 1 to 100,
n represents the average addition mole number of PO and is 0 to 99, and $m > n .$
When n is not 0, there are no restrictions on the addition sequence of the (EO)m and (PO)n, and the addition may be in blocks or may be random.
Further, o represents the average addition mole number of EO and is 1 to 100,
p represents the average addition mole number of PO and is 0 to 99, and $o > p .$
When p is not 0, there are no restrictions on the addition sequence of the (EO)o and (PO)p, and the addition may be in blocks or may be random.]

2. The pretreatment liquid according to claim 1, wherein the polyvalent metal salt in the coagulant (A) comprises a calcium salt.

3. The pretreatment liquid according to claim 1 or 2, wherein the surfactant (B) comprises a polyoxyalkylene alkylamine wherein R in the general formula (1) is a linear or branched alkyl group having 8 to 20 carbon atoms, or a linear or branched alkenyl group having 8 to 20 carbon atoms.

4. The pretreatment liquid according to any one of claims 1 to 3, wherein the resin (C) comprises one or more types of resin particles selected from the group consisting of polyurethane resin particles, polyurethane polyurea resin particles, poly(meth)acrylic resin particles, acrylic-modified polyurethane resin particles, and, polyolefin resin particles.

5. An ink set comprising:
the pretreatment liquid according to any one of claims 1 to 4, and
an aqueous inkjet ink comprising a pigment and water.

6. A substrate to which a pretreatment liquid has been applied, having a layer formed from the pretreatment liquid according to any one of claims 1 to 4 on the substrate.

7. A printed matter obtained by printing an aqueous inkjet ink comprising a pigment and water on the substrate to which a pretreatment liquid has been applied according to claim 6.

## Patentansprüche

1. Vorbehandlungsflüssigkeit, die zusammen mit einer wässrigen Tintenstrahldrucktinte verwendet werden kann, umfassend ein Pigment und Wasser, wobei
die Vorbehandlungsflüssigkeit ein Koagulationsmittel (A), ein Tensid (B), ein Harz (C) und Wasser umfasst,
das Koagulationsmittel (A) ein Metallsalz umfasst, das zumindest ein mehrwertiges Metallsalz umfasst, und
das Tensid (B) ein Polyoxyalkylenalkylamin umfasst, das durch die nachstehende allgemeine Formel (1) dargestellt ist, wobei die Zumischungsmenge des durch die allgemeine Formel (1) dargestellten Polyoxyalkylenalkylamins 0,5 bis 100 Massen-% in Beziehung zur Zumischungsmenge des Harzes (C) beträgt, wobei die Vorbehandlungsflüssigkeit ferner ein auf Acetylendiol basierendes Tensid mit einem Hydrophil-Lipophil-Gleichgewicht (HLB-Wert) von 4 bis 14 umfasst, wobei der HLB-Wert wie in der Beschreibung angegeben bestimmt wird. 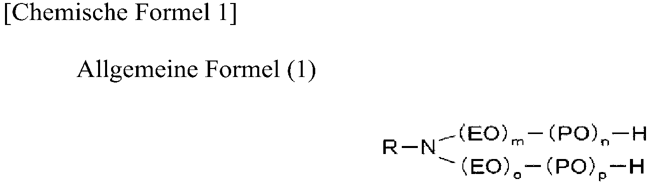 [In der allgemeinen Formel (1)
stellt R eine lineare oder verzweigte Alkylgruppe mit 6 bis 22 Kohlenstoffatomen, eine lineare oder verzweigte Alkenylgruppe mit 6 bis 22 Kohlenstoffatomen, eine lineare oder verzweigte Alkylcarbonylgruppe mit 6 bis 22 Kohlenstoffatomen oder eine lineare oder verzweigte Alkenylcarbonylgruppe mit 6 bis 22 Kohlenstoffatomen dar.
EO stellt eine Ethylenoxidgruppe dar, und PO stellt eine Propylenoxidgruppe dar.
m stellt die durchschnittliche Additionsmolzahl von EO dar und beträgt 1 bis 100,
n stellt die durchschnittliche Additionsmolzahl von PO dar und beträgt 0 bis 99, und $m > n .$
Wenn n nicht 0 ist, bestehen keine Einschränkungen hinsichtlich der Additionsreihenfolge von (EO)ₘ und (PO)ₙ, und die Addition kann in Blöcken sein oder kann zufällig sein.
Ferner stellt o die durchschnittliche Additionsmolzahl von EO dar und beträgt 1 bis 100, p stellt die durchschnittliche Additionsmolzahl von PO dar und beträgt 0 bis 99, und $o > p .$
Wenn p nicht 0 ist, bestehen keine Einschränkungen hinsichtlich der Additionsreihenfolge von (EO)ₒ und (PO)ₚ, und die Addition kann in Blöcken sein oder kann zufällig sein.]

2. Vorbehandlungsflüssigkeit nach Anspruch 1, wobei das mehrwertige Metallsalz in dem Koagulationsmittel (A) ein Calciumsalz umfasst.

3. Vorbehandlungsflüssigkeit nach Anspruch 1 oder 2, wobei das Tensid (B) ein Polyoxyalkylenalkylamin umfasst, wobei R in der allgemeinen Formel (1) eine lineare oder verzweigte Alkylgruppe mit 8 bis 20 Kohlenstoffatomen oder eine lineare oder verzweigte Alkenylgruppe mit 8 bis 20 Kohlenstoffatomen ist.

4. Vorbehandlungsflüssigkeit nach einem der Ansprüche 1 bis 3, wobei das Harz (C) eine oder mehrere Arten von Harzpartikeln umfasst, ausgewählt aus der Gruppe bestehend aus Polyurethanharzpartikeln, Polyurethan-Polyharnstoffharzpartikeln, Poly(meth)acrylharzpartikeln, acrylmodifizierten Polyurethanharzpartikeln und Polyolefinharzpartikeln.

5. Tintensatz, umfassend:
die Vorbehandlungsflüssigkeit nach einem der Ansprüche 1 bis 4; und
eine wässrige Tintenstrahldrucktinte umfassend ein Pigment und Wasser.

6. Substrat, auf das eine Vorbehandlungsflüssigkeit aufgebracht wurde, welches eine Schicht aufweist, die auf dem Substrat aus der Vorbehandlungsflüssigkeit nach einem der Ansprüche 1 bis 4 gebildet ist.

7. Druckerzeugnis, erhalten durch Bedrucken des Substrats, auf das eine Vorbehandlungsflüssigkeit nach Anspruch 6 aufgebracht wurde, mit einer wässrigen Tintenstrahldrucktinte umfassend ein Pigment und Wasser.

## Revendications

1. Liquide de prétraitement pouvant être utilisé conjointement avec une encre aqueuse pour jet d'encre comprenant un pigment et de l'eau, étant entendu que
le liquide de prétraitement comprend un coagulant (A), un tensioactif (B), une résine (C) et de l'eau,
le coagulant (A) comprend un sel de métal qui comprend au moins un sel de métal polyvalent, et
le tensioactif (B) comprend une alkylamine de polyoxyalkylène représentée par la formule générale (1) suivante, la quantité de mélange de l'alkylamine de polyoxyalkylène représentée par la formule générale (1) étant de 0,5 à 100 % en masse par rapport à la quantité de mélange de la résine (C), le liquide de prétraitement comprenant en outre un tensioactif à base d'acétylène diol présentant un indice d'équilibre hydrophile-lipophile (valeur HLB) de 4 à 14, la valeur HLB étant déterminée de la manière indiquée dans la description, 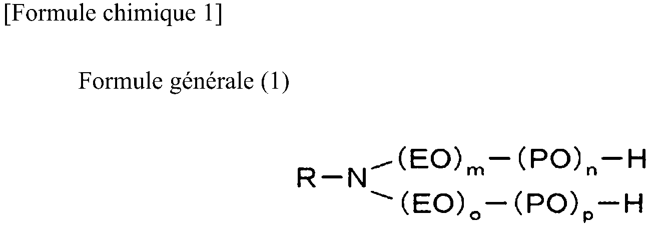 [dans la formule générale (1),
R représente un groupe alkyle linéaire ou ramifié ayant 6 à 22 atomes de carbone, un groupe alcényle linéaire ou ramifié ayant 6 à 22 atomes de carbone, un groupe alkylcarbonyle linéaire ou ramifié ayant 6 à 22 atomes de carbone, ou un groupe alcénylcarbonyle linéaire ou ramifié ayant 6 à 22 atomes de carbone,
EO représente un groupe oxyde d'éthylène, et PO représente un groupe oxyde de propylène,
m représente le nombre moyen de moles d'EO ajoutées et vaut de 1 à 100,
n représente le nombre moyen de moles de PO ajoutées et vaut de 0 à 99, et $m > n ;$
lorsque n n'est pas égal à 0, il n'y a aucune restriction quant à l'ordre d'addition des (EO)m et (PO)n, et l'addition peut se faire par blocs ou de manière aléatoire,
de plus, o représente le nombre moyen de moles d'EO ajoutées et vaut de 1 à 100,
p représente le nombre moyen de moles de PO ajoutées et vaut de 0 à 99, et $o > p ;$
lorsque p n'est pas égal à 0, il n'y a aucune restriction quant à l'ordre d'addition des (EO)o et (PO)p, et l'addition peut se faire par blocs ou de manière aléatoire.]

2. Liquide de prétraitement selon la revendication 1, dans lequel le sel de métal polyvalent présent dans le coagulant (A) comprend un sel de calcium.

3. Liquide de prétraitement selon la revendication 1 ou 2, dans lequel le tensioactif (B) comprend une alkylamine de polyoxyalkylène où R, dans la formule générale (1), est un groupe alkyle linéaire ou ramifié ayant 8 à 20 atomes de carbone, ou un groupe alcényle linéaire ou ramifié ayant 8 à 20 atomes de carbone.

4. Liquide de prétraitement selon l'une quelconque des revendications 1 à 3, dans lequel la résine (C) comprend un ou plusieurs types de particules de résine sélectionnées dans le groupe constitué des particules de résine de polyuréthane, des particules de résine de polyuréthane-polyurée, des particules de résine poly(méth)acrylique, des particules de résine de polyuréthane modifiée par de l'acrylique et des particules de résine de polyoléfine.

5. Combinaison d'encre comprenant :
le liquide de prétraitement selon l'une quelconque des revendications 1 à 4, et
une encre aqueuse pour jet d'encre comprenant un pigment et de l'eau.

6. Substrat sur lequel un liquide de prétraitement a été appliqué, présentant une couche formée à partir du liquide de prétraitement selon l'une quelconque des revendications 1 à 4 sur le substrat.

7. Imprimé obtenu par impression d'une encre aqueuse pour jet d'encre comprenant un pigment et de l'eau sur le substrat sur lequel un liquide de prétraitement a été appliqué selon la revendication 6.
